(19) Europäisches Patentamt / European Patent Office / Office européen des brevets

(11) **EP 1 793 621 B1**

(12) **EUROPEAN PATENT SPECIFICATION**

(45) Date of publication and mention
of the grant of the patent:
**22.12.2010 Bulletin 2010/51**

(51) Int Cl.:
***H04N 9/31*** *(2006.01)*          ***G02B 26/10*** *(2006.01)*

(21) Application number: **07104817.7**

(22) Date of filing: **22.12.2003**

(54) **Beam splitter and colour video projector using the beam splitter**

Strahlenteiler und Farbvideoprojektor mit dem Strahlenteiler

Séparateur de faisceau et projecteur vidéo en couleur utilisant le séparateur de faisceau

(84) Designated Contracting States:
**DE GB NL**

(30) Priority: **21.12.2002 KR 20020082093**
　　　　　　**24.01.2003 KR 20030004840**
　　　　　　**28.02.2003 KR 20030012699**
　　　　　　**18.03.2003 KR 20030016843**

(43) Date of publication of application:
**06.06.2007 Bulletin 2007/23**

(62) Document number(s) of the earlier application(s) in
accordance with Art. 76 EPC:
**03258104.3 / 1 432 251**

(73) Proprietor: **SAMSUNG ELECTRONICS CO., LTD.**
**Suwon-si**
**Gyeonggi-do 442-742 (KR)**

(72) Inventors:
• **Kim, Sung-ha**
**Seoul (KR)**
• **Cho, Kun-ho**
**Suwon-si**
**Gyeonggi-do (KR)**
• **Kim, Dae-sik**
**Suwon-si**
**Gyeonggi-do (KR)**
• **Lee, Hee-joong**
**Amyang-si**
**Gyeonggi-do (KR)**

(74) Representative: **Perkins, Dawn Elizabeth et al**
**Venner Shipley LLP**
**20 Little Britain**
**London EC1A 7DH (GB)**

(56) References cited:
**WO-A-00/60397     US-A- 1 935 219**

EP 1 793 621 B1

**Description**

Projection systems are classified into 3-panel projection systems and single-panel projection systems according to the number of light valves that form an image by controlling the on/off operation of light emitted from a high-output lamp on a pixel-by-pixel basis. Single-panel projection systems can have a smaller optical system than three-panel projection systems but provide an optical efficiency of 1/3 that of three-panel projection systems because red, green, and blue colours into which white light is separated are sequentially used. Hence, attempts to increase the optical efficiency of single-panel projection systems have been made.

In a general single-panel projection system, light radiated from a white light source is separated into red, green, and blue colours using a colour filter, and the three colours are sequentially sent to a light valve. The light valve appropriately operates according to the sequence of colours received and creates images. As described above, a single-panel optical system sequentially uses colours, so the light efficiency is reduced to 1/3 of the light efficiency of a three-panel optical system. A scrolling method has been proposed to solve this problem. In a colour scrolling method, white light is separated into red, green, and blue colours, and the three colours are sent to different locations on a light valve. Since an image cannot be produced until all of red, green, and blue colours for each pixel reach the light valve, colour bars are moved at a constant speed in a particular method.

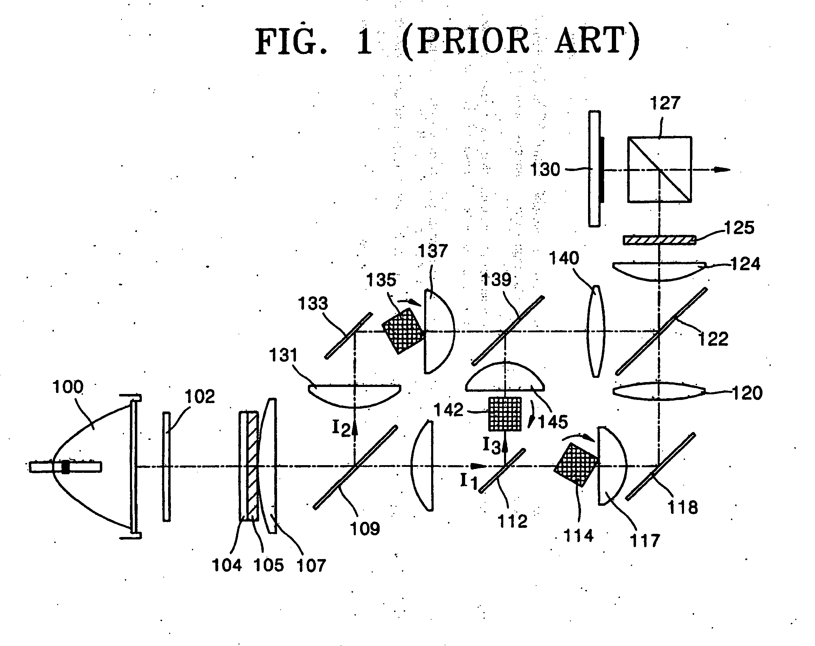

In a conventional single-panel scrolling projection system, as shown in Figure 1, white light emitted from a light source 100 passes through first and second lens arrays 102 and 104 and a polarized beam splitter array 105 and is separated into red, green, and blue beams by first through fourth dichroic filters 109, 112, 122, and 139. To be more specific, the red beam R and the green beam G, for example, are transmitted by the first dichroic filter 109 and advance along a first light path I1, while the blue beam B is reflected by the first dichroic filter 109 and travels along a second light path I2. The red beam R and the green beam G on the first light path I1 are separated by the second dichroic filter 112. The second dichroic filter 112 transmits the red beam R along the first light path I1 and reflects the green beam G along a third light path I3.

As described above, the light emitted from the light source 100 is separated into the red beam R, the green beam G, and the blue beam B, and they are scanned while passing through corresponding first through third prisms 114, 135, and 142. The first through third prisms 114, 135 and 142 are disposed in the first through third light paths I1, I2, and I3, respectively, and rotate at a uniform speed such that red, green, and blue colour bars are scanned. The green beam G and the blue beam B that travel along the second and third light paths I2 and I3, respectively, are transmitted and reflected by the third dichroic filter 139, respectively, and then combined. Finally, the red, green, and blue beams are combined by the fourth dichroic filter 122. The combined beam is transmitted by a polarized beam splitter 127 and forms a picture using a light valve 130.

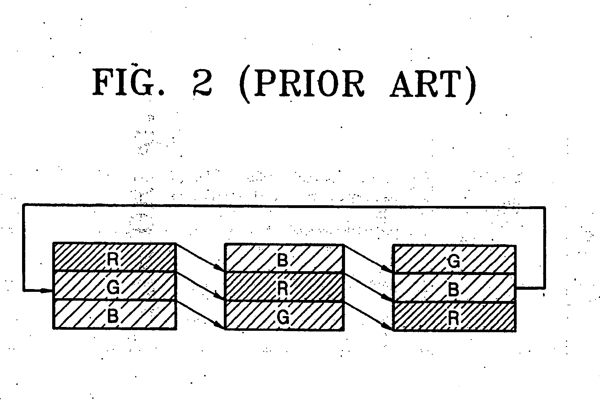

The scanning of the red, green, and blue colour bars due to rotation of the first through third prisms 114, 135, and 142 is shown in Figure 2. Scrolling represents the movement of colour bars formed on the surface of the light valve 130 when prisms corresponding to colours are synchronously rotated.

The light valve 130 forms a picture by processing picture information that depends on an on-off signal for each pixel. The formed picture is magnified by a projecting lens (not shown) and lands on a screen.

Since such a method is performed using a light path provided for each colour, a light path correction lens must be provided for each colour, and a component part for re-collecting separated light beams must be provided for each colour. Accordingly, an optical system is large, and yield is degraded due to a complicate manufacturing and assembling process. In addition, a large amount of noise is generated due to the driving of three motors for rotating the first through third prisms 114, 135, and 142, and the manufacturing costs of a conventional projection system adopting the above-described method is increased compared to a colour wheel method adopting only one motor.

In order to produce a colour picture using a scanning technique, colour bars as shown in Figure 2 must be moved at a constant speed. The conventional projection system must synchronize a light valve with three prisms in order to achieve scanning. However, controlling the synchronization is not easy. Further, because the scanning prisms 114, 135, and 142 make circular motions, the speed of colour scanning by the three scanning prisms is irregular, consequently deteriorating the quality of an image.

WO 00/60397 discloses an optical scanner having a dichroic cube for splitting incident light into R, G and B components, scrolling scan optics and compensation optics.

The present invention provides a colour video projector including:

a beam splitter comprising:

a first dichroic mirror plane reflecting first colour light among said light while transmitting second and third colour light;
a second dichroic mirror plane which is installed on the path of second and third colour light transmitted by the first dichroic mirror plane, has an area equal to or different than an area of the first dichroic mirror plane, and reflects the second colour light while transmitting the third colour separated light; and
a third dichroic mirror plane which is installed on the path of the third colour light transmitted by the second dichroic mirror plane, has an area different from at least one of the areas of the first and second dichroic mirror planes, and reflects the third colour light;

first and second focusing means comprising either cylindrical lenses or optical diffraction elements which focus an incident beam so that the cross-section of the incident beam is only reduced in one direction;
input and output moveable cylindrical lens array means located between the first and second focusing means; and
actuator means for moving the cylindrical lens array means;
wherein the first focusing means is positioned to receive the colour-separated light from the beam splitter; and operation of the actuator means produces distinct scanning substantially monochrome bars from the colour-separated light from the beam splitter; **characterised in that** the cylindrical lens array means comprises:

a first spiral lens disk which includes a plurality of cylindrical lens cells that are spirally arranged and is designed to be able to rotate;
a second spiral lens disk which is installed opposite to the first spiral lens disk and designed so as to rotate at the same speed as the first spiral lens disk; and
a glass rod installed between the first and second spiral lens disks.

Preferred features of the invention are set out in appended claims 2 to 7.
Embodiments of the present invention and comparative examples will now be described, with reference to Figures 3 to 29 of the accompanying drawings, in which:

Figure 1 is a schematic view of the optical configuration of a conventional single-panel projection system using a conventional colour illumination system;
Figure 2 illustrates how red, green, and blue colour bars are scanned due to rotation of the prisms of Figure 1;
Figure 3 shows the optical configuration of a first colour illumination system according to an example;
Figure 4 is a schematic view of the optical configuration of the light pipe shown in Figure 3;
Figure 5 is a schematic perspective view of the optical source of Figure 3 and the optical configuration of a modification of the light pipe of Figure 4;
Figure 6 is a top view of the light pipe of Figure 5;
Figure 7 is a front view of the light pipe of Figure 5;
Figure 8 is a perspective view showing a driving source and a cylindrical lens array that is used as the scanning unit of Figure 3;
Figure 9 is a cross-section of the structure in Figure 8;
Figures 10, 11, and 12 are schematic views illustrating the operation of the colour illumination system of Figure 3;
Figure 13 is a schematic view of an optical configuration of a modification of the colour illumination system of Figure 3;
Figure 14 is a schematic perspective view of the major elements extracted from Figure 13;
Figure 15 is a schematic view of the optical configuration of another modification of the colour illumination system of Figure 3;
Figure 16 shows the optical configuration of a second projection system according to the present invention using a light pipe;
Figure 17 is a top view of the light pipe of Figure 16;
Figure 18 is a perspective view of a modification of the light pipe of Figure 16;
Figure 19 is a top view of the light pipe of Figure 18;
Figure 20 is a top view of another modification of the light pipe of Figure 16;
Figure 21A is a front view of a spiral lens disk used in the scanning unit in the projection system of Figure 16;
Figure 21B is a perspective view of the scanning unit in the projection system of Figure 16;
Figure 22 shows the shapes of the colour bars formed by a light pipe according to the present invention;
Figure 23 shows the optical configuration of a third projection system according to an example;
Figure 24 is a perspective view of a light pipe used in the example of Figure 23;
Figure 25A is a top view of the light pipe of Figure 24;
Figure 25B is a front view of the light pipe of Figure 24;
Figures 26A and 26B show the divergent angles of a beam by simulation when the projection system according to the example of Figures 23 to 25 includes no second spiral lens disks and when it includes the second spiral lens disk, respectively;
Figures 27A to 27C are views for explaining the operational effect of the glass rod adopted in the projection system of the example of Figures 23 to 26;

Figure 28 is a schematic view of the entire configuration of a modification of the projection system of Figure 23; and Figure 29 shows an optical configuration obtained by changing the optical configuration of the modified projection system of Figure 28.

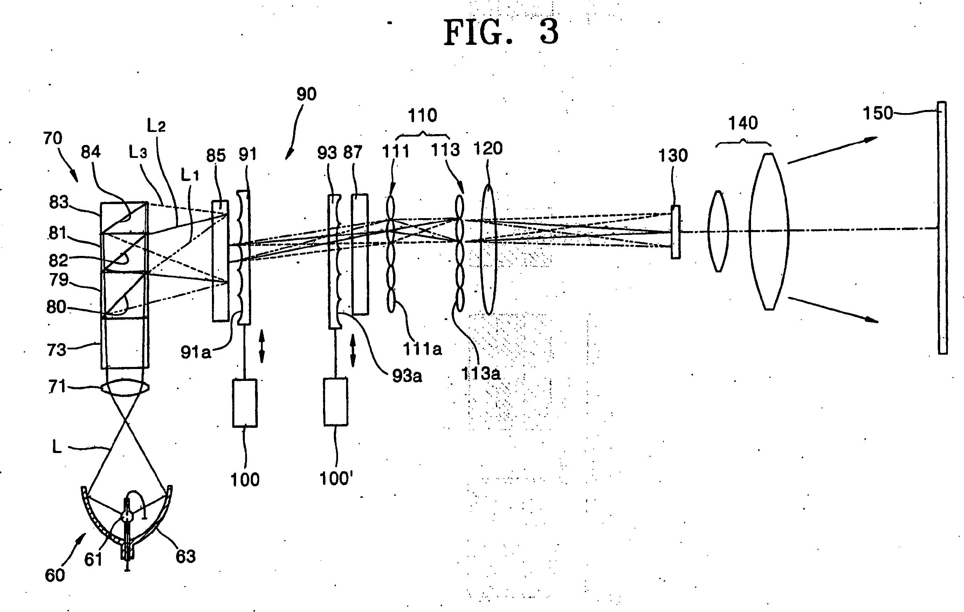

Referring to Figure 3, a first colour illumination system includes a light source 60, a light pipe 70, a first focusing lens 85, and a scanning unit 90. The light pipe 70 separates light emitted from the light source 60, according to a wavelength range. The first focusing lens 85 focuses beams into which the light has been separated by the light pipe 70. The scanning unit 90 forms colour bars by changing the travel paths of the separated beams in different wavelength ranges and scans the incident separated beams so that the colour bars scan periodically.

The light source 60 produces and emits white light and includes a lamp 61 for generating light and a reflection mirror 63 for reflecting light emitted from the lamp 61 and guiding the path of the reflected light. The reflection mirror 63 may be an elliptic mirror whose first focal point is the position of the lamp 61 and a second focal point is a point where light is focused. Alternatively, the reflection mirror 63 may be a parabolic mirror which uses the lamp 61 as a focal point and is designed so that light beams that are emitted from the lamp 61 and reflected by the parabolic mirror are collimated. The reflection mirror 63 shown in Figure 3 is an elliptic mirror.

The light pipe 70 separates incident light according to a wavelength range and outputs the separated beams at different angles. Also, the light pipe 70 can increase the light usage efficiency by preventing the separated beams from being emitted in directions other than a desired direction.

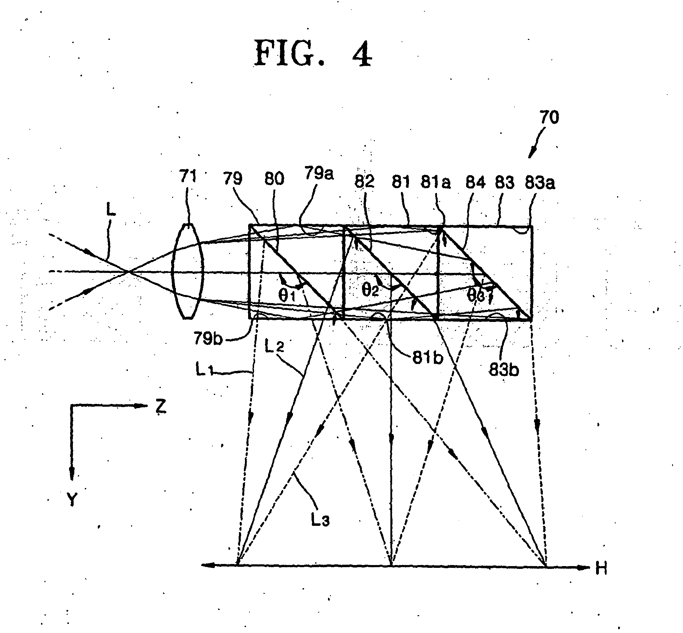

To achieve this, the light pipe 70 includes a plurality of dichroic prisms, each of which reflects light in a particular wavelength range and at the same time transmits light in other wavelength ranges so that incident light (L) can be separated according to a wavelength range. As shown in Figure 4, the light pipe 70 includes first, second, and third dichroic prisms 79, 81, and 83 for separating the incident light L into first, second, and third colour beams $L_1$, $L_2$, and $L_3$.

The first dichroic prism 79 has a first mirror plane 80, which is inclined by an angle $\theta_1$ with respect to the optical axis of the incident light L. The first mirror plane 80 reflects the first colour beam $L_1$ among the incident light L and transmits the second and third colour beams $L_2$ and $L_3$. In other words, the first mirror plane 80 reflects a blue beam B and transmits beams of other colours.

The first dichroic prism 79 also has first reflective planes 79a and 79b, which form the exterior of the first dichroic prism 79. The first reflective planes 79a and 79b reflect incident light so as to travel within the first dichroic prism 79. The incident light has an angle due to the difference between the refractive indices of the first dichroic prism 79 and the outside. To be more specific, the first reflective planes 79a and 79b totally reflect light that is incident at an angle greater than a predetermined angle, that is, a critical angle, due to the difference between the refractive indices of the first dichroic prism 79 and the outside. Thus, the light usage efficiency of the incident light L is increased.

The second dichroic prism 81 is installed close to the first dichroic prism 79 and has a second mirror plane 82, which is inclined by an angle $\theta_2$ with respect to the optical axis of the incident light L. The second mirror plane 82 reflects the second colour beam $L_2$, for example, a red beam R, among the incident light L and transmits the first and third colour beams $L_1$ and $L_3$.

The third dichroic prism 83 is installed close to the second dichroic prism 81 and has a third mirror plane 84, which is inclined by an angle $\theta_3$ with respect to the optical axis of the incident light L. The third mirror plane 84 reflects the third colour beam $L_3$. for example, a green beam G, among the incident light L and transmits the first and second colour beams $L_1$ and $L_2$. The third mirror plane 83 may be replaced by a total reflection mirror that can reflect all incident light.

The second and third dichroic prisms 81 and 83 also have second reflective planes 81a and 81b and third reflective planes 83a and 83b, respectively, which form the exteriors of the second and third dichroic prisms 81 and 83. Since the second reflective planes 81a and 81b and the third reflective planes 83a and 83b play substantially the same role as the first reflective planes 79a and 79b, they will not be described here in detail.

As described above, because the light efficiency is increased due to the use of the first, second, and third reflective planes 79a & 79b, 81a & 81b, and 83a & 83b, an influence of a change in the etendue upon an optical system can be reduced. The etendue denotes an optical conservation quantity in an optical system.

$\theta_1$, $\theta_2$, and $\theta_3$ are made obtuse angles so that the first, second, and third colour beams $L_1$, $L_2$, and $L_3$ reflected by the first, second, and third mirror planes 80, 82, and 84, respectively, can be focused on an image plane (H) of the first focusing lens 85 of Figure 3. To achieve this, the obtuse angles $\theta_1$, $\theta_2$, and $\theta_3$ preferably satisfy Equation 1:

$$\theta_1 > \theta_2 > \theta_3 \qquad (1)$$

However, considering the angles made by the first, second, and third mirror planes 80, 82, and 84 with respect to the optical axis of the incident light L, the obtuse angles $\theta_1$, $\theta_2$, and $\theta_3$ may be the same. In this case, the first, second, and third dichroic prisms 79, 81, and 83 have the same size. Also, the first, second, and third colour beams $L_1$, $L_2$, and $L_3$ in such a range as shown in Figure 4, among the first, second, and third colour beams $L_1$, $L_2$, and $L_3$ reflected by the first, second, and third mirror planes 80, 82, and 84, respectively, are used as effective beams and the rest is not used.

The light pipe 70 of Figure 4 is suitable for an image projector that uses as an image producing means a micro-mirror device (not shown) or the like which can produce an image regardless of the polarization direction of incident light.

Preferably, the light pipe 70 further includes a condensing lens 71 for condensing the incident light L, in front of a light incidence plane of the first dichroic prism 79.

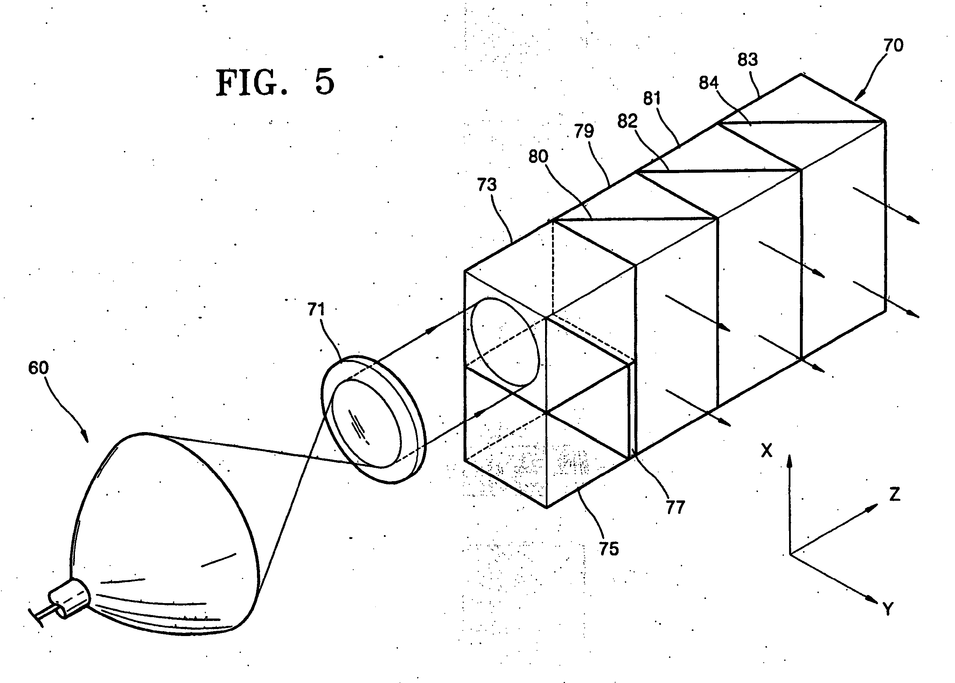

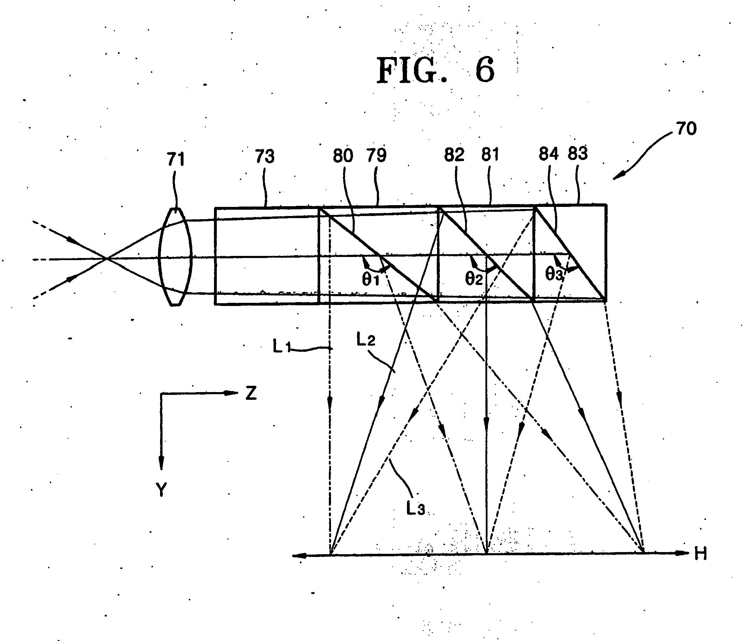

Referring to Figures 5 to 7, a modification of the light pipe 70 of Figure 4 includes first and second polarized beam splitters 73 and 75, a 1/2 wavelength plate 77, and first, second, and third dichroic prisms 79, 81, and 83. Each of the first, second, and third dichroic prisms 79, 81, and 83 reflects light in a particular wavelength range and at the same time transmits light in other wavelength ranges so that incident light (L) can be separated into the first, second, and third colour beams $L_1$, $L_2$, and $L_3$. The first, second, and third colour beams $L_1$, $L_2$, and $L_3$ are focused on the image plane (H) of the first focusing lens 85 of Figure 3 by the first, second, and third mirror planes 80, 82, and 84.

The first polarized beam splitter 73 is installed on a light incidence plane of the first dichroic prism 79, and transmits first light with one polarization direction among unpolarized white light toward the first dichroic prism 79 and at the same time reflects second light with the other polarization direction toward the second polarized beam splitter 75. To achieve this, a first polarization filter 74 is formed on a mirror plane of the first polarized beam splitter 73.

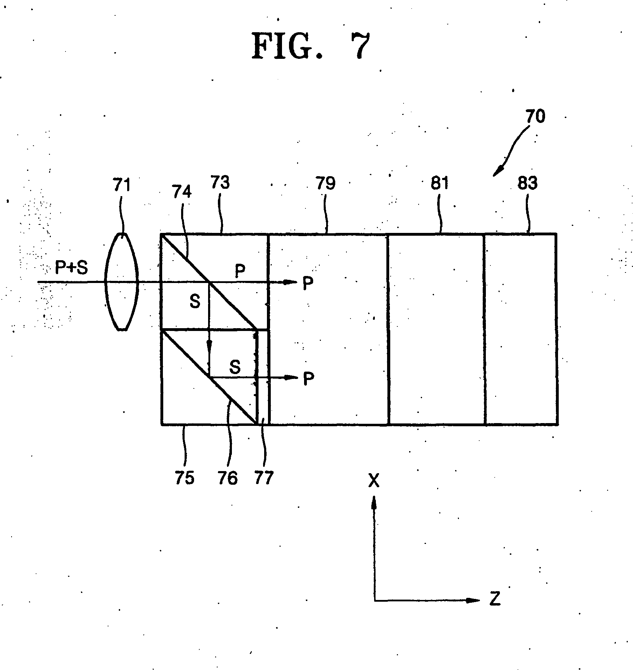

Figure 7 illustrates an example in which unpolarized (P+S) white light is emitted from the light source 60 and the first polarization filter 74 transmits P-polarized light serving as the first light among the P+S white light and reflects S-polarized light serving as the second light.

Referring to Figure 7, the second polarized beam splitter 75 re-reflects the S-polarized light reflected by the first polarized beam splitter 73 and advance the P-polarized light toward the first dichroic prism 79. Because the second polarized beam splitter 75 changes only the path of the S-polarized light without changing its polarization direction, the S-polarized light travels parallel to the P-polarized light transmitted by the first polarized beam splitter 75. To do this, the second polarized beam splitter 75 includes a second polarization filter 76 for reflecting light with one polarization direction, for example, S-polarized light, among the incident white light. The second polarized beam splitter 75 may be constituted with a total reflection mirror for total-reflecting an incident light beam.

The 1/2 wavelength plate 77 changes the phase of received light with one polarization direction by 90 degrees. In other words, the 1/2 wavelength plate 77 changes the received light with one polarization direction to light with the other polarization direction. In Figures 5 and 7, the 1/2 wavelength plate 77 is installed between the second polarized beam splitter 75 and the first dichroic prism 79 and changes the polarization direction of the received second light to that of the first beam. In other words, the 1/2 wavelength plate 77 changes the S-polarized light reflected by the second polarization filter 76 to P-polarized light.

Alternatively, the 1/2 wavelength plate 77 may be installed between the first polarized beam splitter 73 and the first dichroic prism 79 so as to change the polarization direction of a received first beam to that of the second beam.

Since the first, second, and third dichroic prisms 79, 81, and 83 were already described above with reference to Figure 4, they will not be described here.

Preferably, the light pipe 70 of Figure 7 further includes the condensing lens 71 for condensing unpolarized incident white light, in front of a light incidence plane of the first polarized beam splitter 73.

The light pipe 70 having such a structure as shown in FIGS. 5 through 7 can be used in a projection system, to be described later, which adopts a liquid crystal display as an image producing means.

In contrast with what was described above, each of the first, second, and third dichroic prisms 79, 81, and 83 may transmit a beam of a particular colour and at the same time reflect beams of other colours. Also, the optical arrangement of the first, second, and third dichroic prisms 79, 81, and 83 may be changed. Since the manufacturing process of the first, second, and third dichroic prisms 79, 81, and 83 is well known in the field of optical applications, it will not be described here.

Referring back to Figure 3, the first focusing lens 85 focuses beams into which incident light has been separated by the first, second, and third dichroic prisms 79, 81, and 83. To do this, the first focusing lens 85 is preferably a cylindrical lens. Alternatively, the first focusing lens 85 may be an optical diffraction element which is a flat plate on which a diffraction pattern is formed such that beams travelling in an identical direction are focused. Since the structure and manufacturing process of a lens whose diffraction pattern causes incident light to be converged or diverged are widely known, they will not be described here.

The scanning unit 90 includes a first cylindrical lens array 91 and a first driving source 100. The first cylindrical lens array 91 is formed of a plurality of cylindrical lenses 91a, which are disposed adjacent to one another and have identical refractive power. The cylindrical lenses 91a independently converge or diverge incident light. As shown in Figure 3, the cylindrical lenses 91a are concave so as to diverge incident light. However, the cylindrical lenses 91a may be formed by forming a diffraction pattern on a flat plate.

Preferably, the scanning unit 90 further includes a second cylindrical lens array 93 and a second driving source 100' for driving the second cylindrical lens array 93. The second cylindrical lens array 93 is installed on the path of light transmitted by the first cylindrical lens array 91 and cooperates with the first cylindrical lens array 91 in order to scan the incident light. Similar to the first cylindrical lens array 91, the second cylindrical lens array 93 is formed of a plurality of cylindrical lenses 93a, which are disposed adjacent to one another and have identical refractive power. The cylindrical lenses 93a independently converge or diverge incident light. As shown in Figure 3, the cylindrical lenses 93a are concave so as to diverge incident light. However, the cylindrical lenses 93a may be a flat plate on which a diffraction pattern is formed.

The first and second driving sources 100 and 100' drive the first and second cylindrical lens arrays 91 and 93, respectively, so that light transmitted by the first and second cylindrical lens arrays 91 and 93 can form colour bars and that the colour bars can be scanned. Thus, the colour bars are formed at different locations on an image producing means 130 to be described later and scanned. For example, beams of three colours red, green, and blue impinge on different areas of the image producing means 130 in the order green, red, blue, then in the order red, blue, green and finally in the order blue, green, red. This pattern repeats. A driving unit 140 may be either a voice coil motor or a piezoelectric driver that is driven according to a piezoelectric principle.

Preferably, the first colour illumination system shown in Figure 3 further includes a second focusing lens 87, a fly-eye lens 110 and a relay lens 120 in consideration of the focal point location and uniformity of light transmitted by the scanning unit 90. The relay lens 120 delivers light to a predetermined location while maintaining the size of the light beam constant.

The second focusing lens 87 re-focuses the light transmitted by the scanning unit 90. Preferably, the second focusing lens 87 is a cylindrical lens designed to focus beams that travel in an identical direction among incident beams. Alternatively, the second focusing lens 87 may be an optical diffraction element which is a flat plate on which a diffraction pattern is formed such that beams travelling in an identical direction are focused.

The fly-eye lens array 110 is installed on a light path between the second focusing lens 87 and the relay lens 120 and cooperates with the relay lens 120 so that colour bar arrays formed on the fly-eye lens array 110 are focused on different colour areas of a predetermined element, that is, a light valve 130. Also, the fly-eye lens array 110 equalizes the intensities of beams applied to the light valve 130. To achieve this, the fly-eye lens array 110 includes a first fly-eye lens 111, which has a plurality of convex portions 111a arranged two-dimensionally on its incidence or emission plane, and a second fly-eye lens 113, which is installed adjacent to the first fly-eye lens 111 and has a plurality of convex portions 113a arranged two-dimensionally on the incidence or emission plane of the second fly-eye lens 113.

The relay lens 120 delivers light transmitted by the fly-eye lens array 110 to a predetermined location, for example, the light valve 130.

The operation of the first colour illumination system will now be described with reference to Figures 3 and 10 to 12.

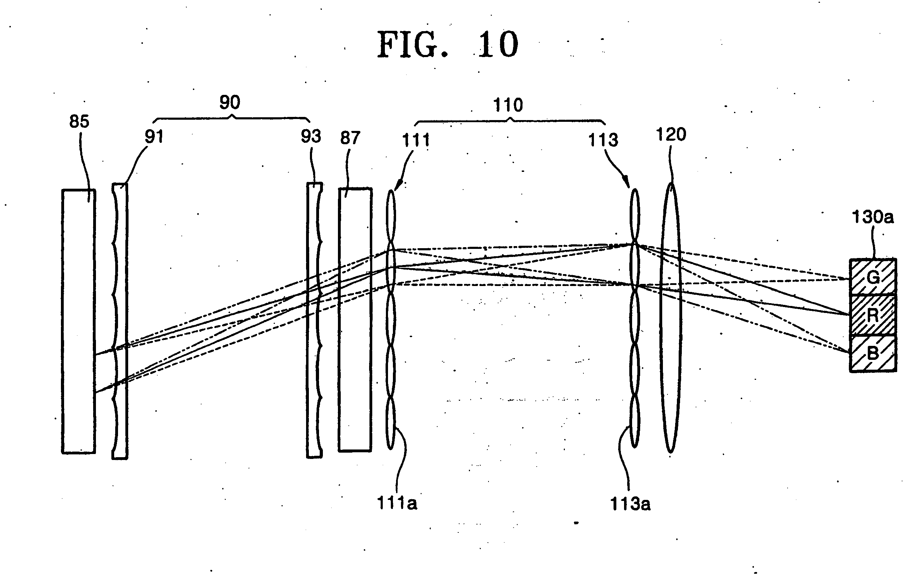

Figure 10 shows the arrangement of the first and second cylindrical lens arrays 91 and 93 created due to the driving of the first and second driving sources 100 and 100' of Figure 3. In this case, colour beams with different wavelengths, into which light has been separated by the light pipe 70 of Figure 3, are focused on the first focusing lens 85. The focused beam is re-separated into several beams by the first cylindrical lens array 91. The separated beams pass through the second cylindrical lens array 93, the second focusing lens 87, the fly-eye lens array 110, and the relay lens 120 and forms colour bars on different colour areas of the light valve 130 of Figure 3. The formed colour bars are arranged downward in the order of green, red, blue as indicated by reference numeral 130a. As described above, different colour bars can land on different colour areas of the light valve 130.

Preferably, a focal distance formed by the first and second focusing lenses 85 and 87 and the first and second cylindrical lens arrays 91 and 93 is set so that, when parallel beams are incident upon the first focusing lens 85, beams emitted from the second focusing lens 87 can be focused on the first fly-eye lens 111. The focal distance is determined due to an adequate selection of the refractive power of each of the first and second focusing lenses 85 and 87 and the first and second cylindrical lens arrays 91 and 93. Since this focal distance determination method is well known, it will not be described here in greater detail.

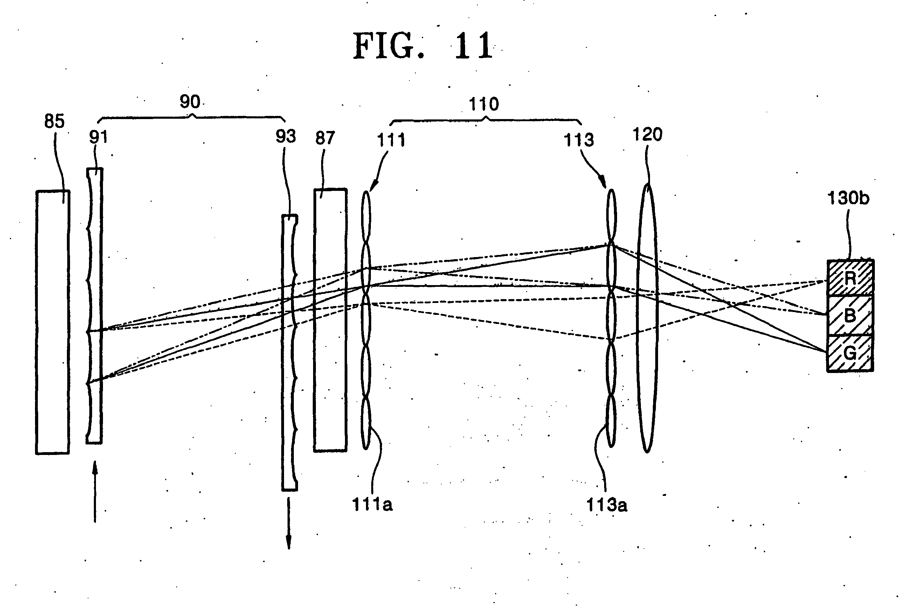

Figure 11 shows another arrangement of the first and second cylindrical lens arrays 91 and 93 created due to the driving of the first and second driving sources 100 and 100' of Figure 3. Compared with Figure 10, the first cylindrical lens array 91 of Figure 11 is disposed higher than the location of the first cylindrical lens array 91 of Figure 10, and the second cylindrical lens array 93 is disposed lower than the location of the second cylindrical lens array 93 of Figure 10. In this case, colour bars are formed downward in the order of red, blue, and green as indicated by reference numeral 130b.

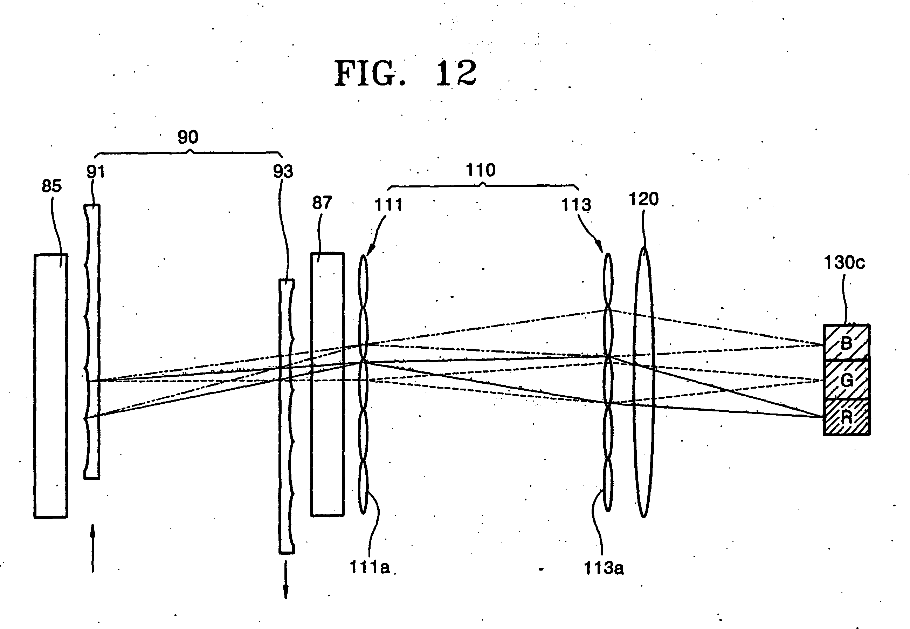

Figure 12 shows still another arrangement of the first and second cylindrical lens arrays 91 and 93 created due to the driving of the first and second driving sources 100 and 100' of Figure 3. Compared with FIGS. 10 and 11, the first cylindrical lens array 91 of Figure 12 is disposed higher than the first cylindrical lens array 91 of Figure 11, and the second cylindrical lens array 93 of Figure 12 is disposed lower than the second cylindrical lens array 93 of Figure 11. In this case, colour bars are formed downward in the order of blue, green, and red as indicated by reference numeral 130c.

The pattern of the colour bar arrangements 130a, 130b, and 130c is repeated by repeating a pattern of the three arrangements of the first and second cylindrical lens arrays 91 and 93 shown in FIGS. 10 through 12.

Referring back to Figure 3, the projection system is constituted with the above-described colour illumination system, the light valve 130, and a projection lens unit 140. The light valve 130 produces an image from beams received via the fly-eye lens array 110. The projection lens unit 140 magnifies the image and projects the magnified image onto a screen 150.

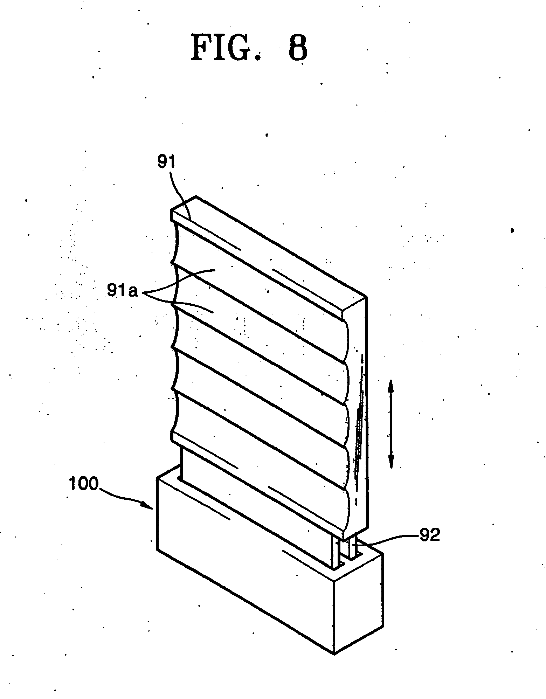

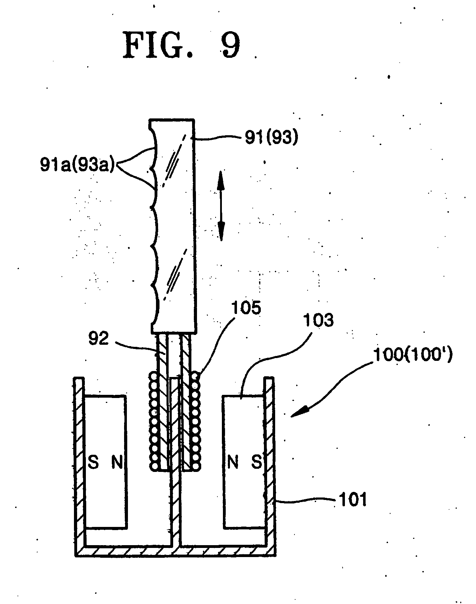

As described above, the colour illumination system includes the light source 60 for generating and projecting light, the light pipe 70 for separating incident light according to a wavelength range, the first and second focusing lenses 85 and 87, the scanning unit 90, and the fly-eye lens array 110. Since the structure and function of each of the component elements of the colour illumination system and the arrangement of these component elements were already described above with reference to Figures 3 to 12, they will not be described here.

The light valve 130 is installed at a location where colour bars scanned by the scanning unit 90 land. Red, green, and blue beams are incident upon effective image areas of the light valve 130 while being scanned, thus forming colour bars.

As shown in Figure 3, the light valve 130 is a transmissive liquid crystal display. In this case, the transmissive liquid crystal display produces an image by each pixel that either transmits or blocks an incident beam.

Alternatively, the light valve 130 may be a reflective liquid crystal display or a micro-mirror device whose individual pixels reflect their incident beams along different paths. In this case, an optical element, such as, a beam splitter (not shown), for advancing the image formed by the light valve 130 toward the screen 150 may be further installed on a light path. Since the structure and function of the light valve 130 are well known, they will not be described in greater detail.

The projection lens unit 140 is installed between the light valve 130 and the screen 150 and magnifies incident light and projects the magnified light onto the screen 150.

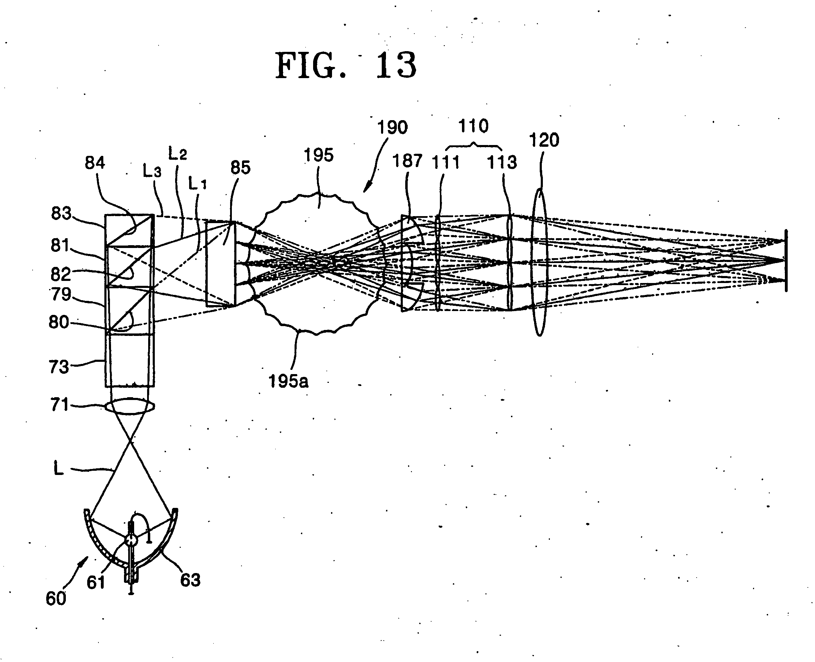

Figure 13 shows an optical configuration of a modification of the colour illumination system of Figure 3. The modified colour illumination system includes the light source 60, the light pipe 70, the first focusing lens 85, and a scanning unit 190. Since the light source 60, the light pipe 70, and the first focusing lens 85 were already described above, they will not be described here in detail.

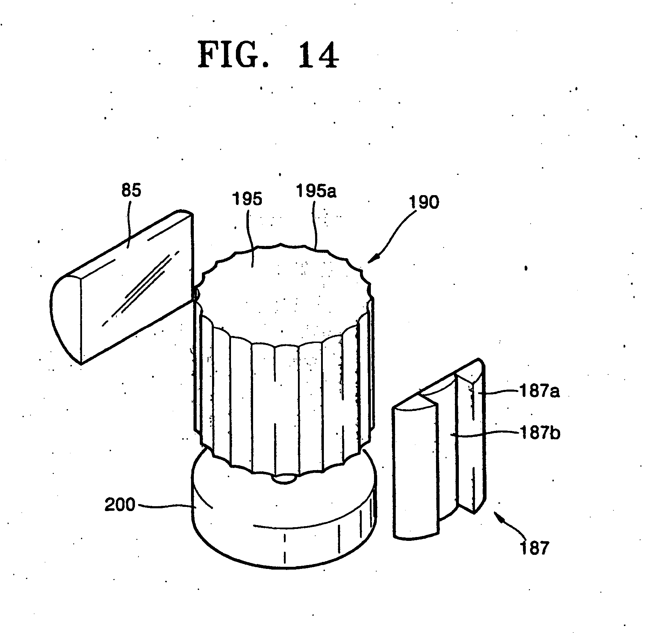

The modified colour illumination system is different from the colour illumination system of Figure 3 in having the scanning unit 190. Referring to Figures 13 and 14, the scanning unit 190 is constituted with a revolving cylindrical lens array 195, which is rotatably installed on the light path, and a driving source 200, which rotates the revolving cylindrical lens array 195.

The revolving cylindrical lens array 195 has a cylindrical shape. A plurality of cylindrical lenses 195a having an identical refractive power are arranged on the outer circumference of the revolving cylindrical lens array 195 such as to be adjacent to one another. The cylindrical lenses 195a independently converge or diverge incident light. The cylindrical lenses 195a are geometrically concave. The revolving cylindrical lens array 195 may be a flat plate on which a diffraction pattern is formed so as to converge or diverge incident light.

The driving source 200 is a typical rotation-driving device, such as, a motor. Since the structure of the typical rotation-driving device is widely known, it will not be described in greater detail.

As described above, the scanning unit 190 adopts the revolving cylindrical lens array 195 so as to consecutively scroll separated colour bars in contrast with the scanning unit 90 included in the colour illumination system of Figure 3.

Preferably, the modified colour illumination system of Figure 13 further includes a second focusing lens 187, the fly-eye lens array 110, and the relay lens 120.

As shown in Figure 14, the second focusing lens 187 is disposed opposite to some of the cylindrical lenses 195a of the revolving cylindrical lens array 195 and basically has a shape of a half cylinder as the first focusing lens 85. The second focusing lens 187 is constituted with first and second portions 187a and 187b, which have different curvature. As shown in Figure 14, the first portion 187a corresponds to either outer portion of the second focusing lens 187, and the second portion 187b corresponds to a portion in between the outer portions of the second focusing lens 187. Because the first and second portions 187a and 187b have different curvatures, both beams transmitted by the first portion 187a and beams transmitted by the second portion 187b can be focused on the same plane.

Referring back to Figure 13, the fly-eye lens array 110 is installed on a light path between the second focusing lens 187 and the relay lens 120. Since the structure and function of the fly-eye lens array 110 were already described above, they will not be described in greater detail.

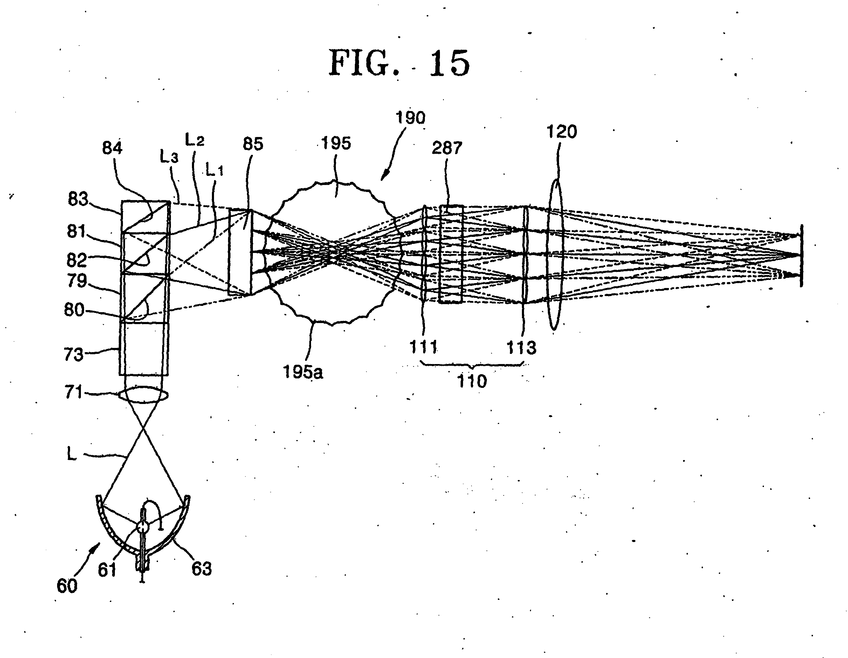

Figure 15 is a schematic view of an optical configuration of another modification of the colour illumination system of Figure 3. Referring to Figure 15, the modified colour illumination system includes the light source 60, the light pipe 70, the first focusing lens 85, the scanning unit 190, a second focusing lens 287, the fly-eye lens array 110, and the relay lens 120. Since the structures and functions of the light source 60, the light pipe 70, the first focusing lens 85, and the scanning unit 190 were already described above, they will not be described in greater detail.

The modified colour illumination system of Figure 15 is **characterized in that** the second focusing lens 187 is installed at a location different from that of the modified colour illumination system of Figure 13. In other words, in the modified colour illumination system of Figure 15, the second focusing lens 187 is installed between the first and second fly-eye lens 111 and 113 of the fly-eye lens array 110.

The projection system may be constituted with the colour illumination system of Figure 13 or 15, the light valve 130 for producing an image from light received from the fly-eye lens array 110, and the projection system unit 140 for magnifying the image formed on the light valve 130 and projecting the magnified image onto the screen 50. The colour illumination systems of Figure 13 and 15 are different from the colour illumination system of Figure 3 in adopting the scanning unit 190. Since the scanning unit 190 adopts the revolving cylindrical lens array 195 and the driving source 200 for driving the revolving cylindrical lens array 195 and scrolls colour bars, the scanning unit 190 can be easily synchronized with the light valve 130.

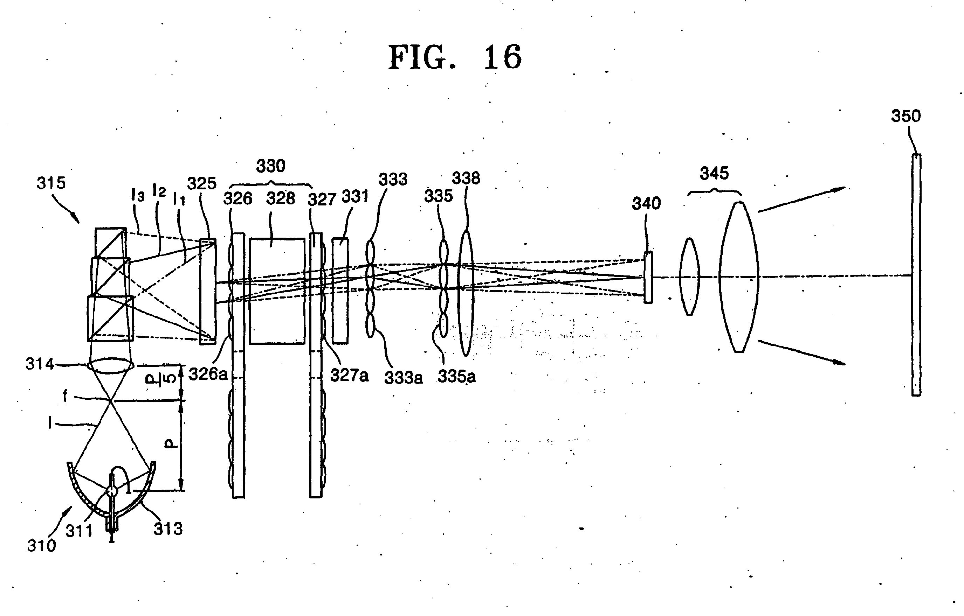

Figure 16 shows an optical configuration of a projection system of the present invention. Referring to Figure 16, the projection system of the present invention includes a light source 310, a light pipe 315, a scanning unit 330, a light valve 340, and a projection lens unit 345. The light pipe 315 separates light emitted from the light source 310, according to colour. The scanning unit 330 scrolls red, green, and blue beams, into which the light emitted form the light source 310 has been separated by the light pipe 315. The light valve 340 forms an image by processing the scanned beams according to an image signal. The projection lens unit 355 magnifies the image and projects the magnified image onto a screen 350.

The light source 310 produces and emits white light and includes a lamp 311 for generating light and a reflection mirror 313 for reflecting the light emitted from the lamp 311 and guiding the reflected light. The reflection mirror 313 may be an elliptic mirror whose first focal point is the position of the lamp 311 and a second focal point is a point where light is focused. Alternatively, the reflection mirror 313 may be a parabolic mirror which uses the lamp 311 as a focal point and is designed so that light beams that are emitted from the lamp 311 and reflected by the parabolic mirror are collimated. The reflection mirror 313 shown in Figure 16 is an elliptic mirror. When a parabolic mirror is used as the reflection mirror 313, a lens for focusing light must be further included.

A collimating lens 314 for collimating incident light is installed on a light path between the light source 310 and the light pipe 315. Preferably, given that P denotes the distance between the light source 310 and the focal point f where light emitted from the light source 310 is focused, the collimating lens 314 is installed P/5 apart from the focal point f. By installing a projection system in this way, the structure of an optical system can be made more compact.

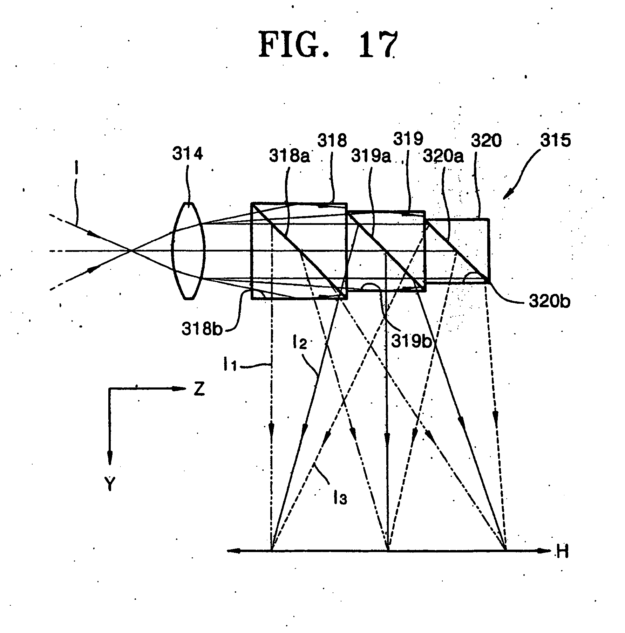

As shown in Figure 17, the light pipe 315 of the present invention includes first, second, and third dichroic prisms 318, 319, and 320. The first dichroic prism 318 has a first dichroic mirror plane 318a for reflecting an incident beam of a particular colour and transmitting incident beams of the other colours. The second dichroic prism 319 is installed on the path of light transmitted by the first dichroic prism 318 and has a second dichroic mirror plane 319a for reflecting an incident beam of a particular colour and transmitting incident beams of the other colours. The third dichroic prism 320 is installed on the path of light transmitted by the second dichroic mirror plane 319a and has a third dichroic mirror plane 320a for reflecting an incident beam of a particular colour and transmitting incident beams of the other colours. When the sizes of the first, second, and third dichroic mirror planes 318a, 319a, and 320a are $S_1$, $S_2$, and $S_3$, respectively, at least two of the sizes $S_1$, $S_2$, and $S_3$ are different. For example, the first, second, and third dichroic mirror planes 318a, 319a, and 320a can have sizes that satisfy a relationship, $S_1 \geq S_2 \geq S_3$ or $S_1 > S_2 \geq S_3$, or its inverse relationship, $S_1 < S_2 \leq S_3$ or $S_1 \leq S_2 < S_3$.

The light pipe 315 is constituted with the first, second, and third dichroic prisms 318, 319, and 320. Preferably, the light pipe 315 having such a structure includes total reflection planes 318b, 319b, and 320b for total-reflecting light that is incident at a predetermined angle, that is, a critical angle or greater. The total reflection planes 318b, 319b, and 320b are provided on external planes of the first, second, and third dichroic prisms 318, 319, and 320 other than the incidence and emission planes thereof.

The total reflection planes 318b, 319b, and 320b reduce a loss in light that travels within the light pipe 315, thereby increasing light efficiency. Light that is incident upon the total reflection planes 318b, 319b, and 320b after being reflected at least one time within the first, second, and third dichroic prisms 318, 319, and 320 is not total-reflected but transmitted because the incidence angle of the light is smaller than the critical angle.

As shown in Figure 17, a first colour beam $I_1$, for example, a red beam R, among incident white light I is reflected by the first dichroic prism 318, and second and third colour beams $I_2$ and $I_3$ are transmitted thereby. The second colour beam $I_2$, for example, a green beam G, is reflected by the second dichroic prism 319, and the third colour beam $I_3$ is transmitted thereby. The third colour beam $I_3$, for example, a blue beam B, is reflected by the third dichroic prism 320. In this way, the incident white light is separated into the first, second, and third colour beams $I_1$, $I_2$, and $I_3$. Because the fist, second, and third dichroic mirror planes 318a, 319a, and 320a have different sizes, the first, second, and third colour beams $I_1$, $I_2$, and $I_3$ with different amounts are reflected thereby. The third dichroic mirror plane 320a can be replaced by a total reflection mirror.

The projection system adopting the light pipe 315 can adopt a deformable mirror device as the light valve 340.

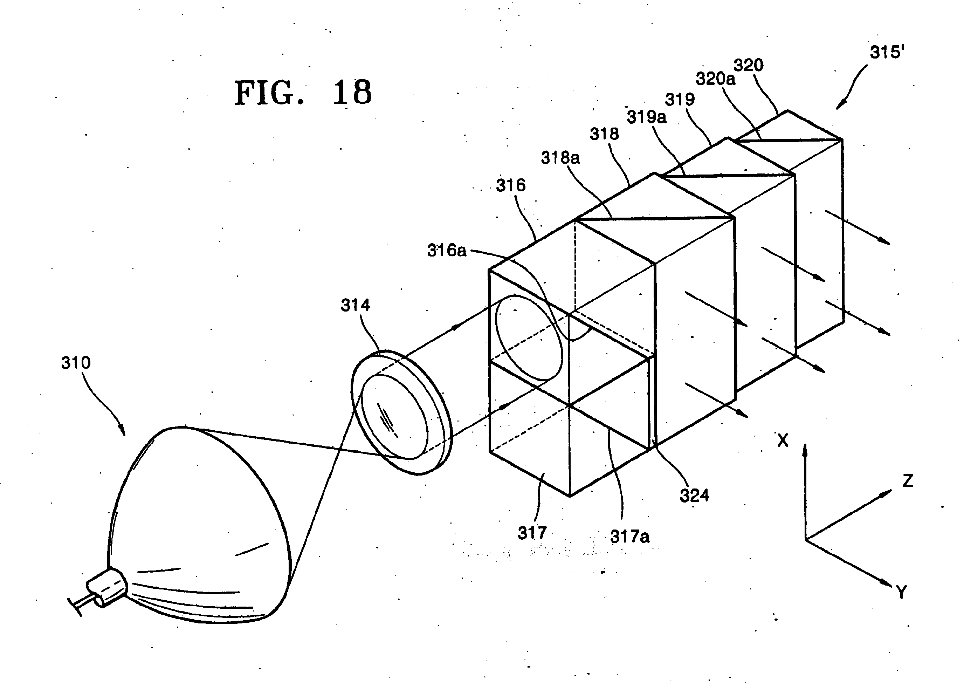

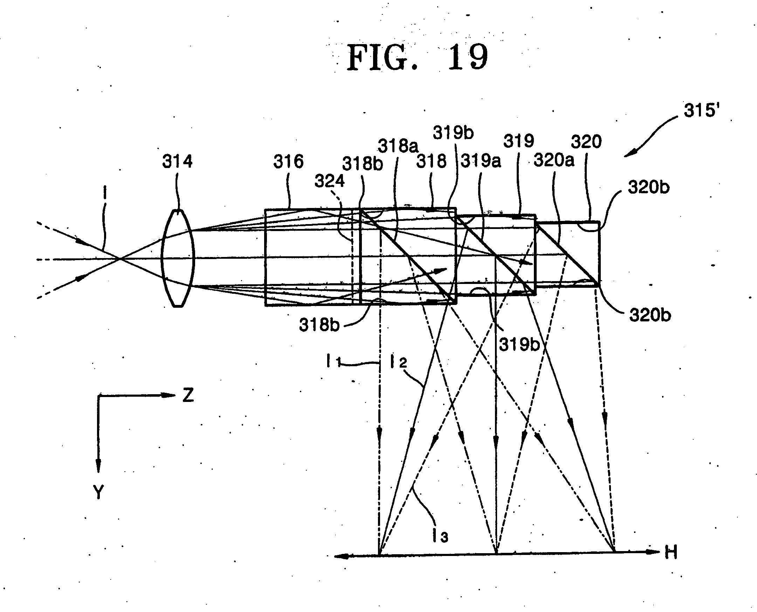

Figures 18 and 19 are a perspective view and a top view, respectively, of a modification of the light pipe 315. Referring to Figures 18 and 19, a light pipe 315', which is a modification of the light pipe 315, includes the first, second, and third dichroic prisms 318, 319, and 320 and first and second polarized beam splitters 316 and 317. The first and second polarized beam splitters 316 and 317 are installed in front of the first dichroic prism 318 and reflect light with one polarization direction among incident light and transmit light with the other polarization direction. Preferably, a 1/2 wavelength plate 324 for changing the polarization direction of incident light is installed between the first or second polarized beam splitter 316 or 317 and the first dichroic prism 318. In Figure 18, the 1/2 wavelength plate 324 is disposed between the second polarized beam splitter 317 and the first dichroic prism 318.

The first polarized beam splitter 316 is installed on the light incidence plane of the first dichroic prism 318, and transmits first light with one polarization direction among unpolarized white light toward the first dichroic prism 318 and at the same time reflects second light with the other polarization direction toward the second polarized beam splitter 317. The first polarized beam splitter 316 includes a first polarization filter 316a, and the second polarized beam splitter 317 includes a second polarization filter 317a.

The second polarized beam splitter 317 re-reflects the second light reflected by the first polarized beam splitter 316 toward the first dichroic prism 318. Because the second polarized beam splitter 317 changes only the path of the second light without changing its polarization direction, the second beam travels parallel to the first light transmitted by the first polarized beam splitter 316. The second polarized beam splitter 317 may be replaced by a total reflection mirror for total-reflecting incident light.

The 1/2 wavelength plate 324 changes the received light with one polarization direction to light with the other polarization direction. Figures 18 and 19 show an example in which the 1/2 wavelength plate 324 is installed between the second polarized beam splitter 317 and the first dichroic prism 318 and changes the polarization direction of the received second light to that of that of the first beam. In other words, the 1/2 wavelength plate 324 changes S-polarized light reflected by the second polarization filter 317a to P-polarized light.

However, the 1/2 wavelength plate 324 may be installed between the first polarized beam splitter 316 and the first dichroic prism 318 so as to change the polarization direction of the received first light to that of the second light.

As described above, the light emitted from the light source 310 has a single polarization direction by using the first and second polarized beam splitters 316 and 317 and the 1/2 wavelength plate 324, and the light with the single polarization direction is separated into colour beams by the first, second, and third dichroic prisms 318, 319, and 320. Since the first, second, and third dichroic prisms 318, 319, and 320 were described above with reference to Figure 17, they will not be described here in greater detail.

The projection system adopting the light pipe 315' can use a liquid crystal display as the light valve 340.

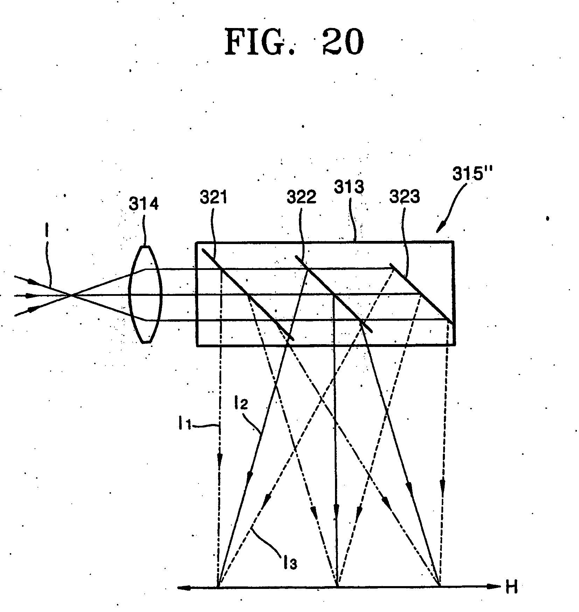

Figure 20 is a top view of a light pipe 315", which is another modification of the light pipe 315 of Figure 16. Referring to Figure 20, the light pipe 315" includes a single prism 313 in which first, second, and third dichroic mirror planes 321, 322, and 323 re included. Preferably, at least two of the first, second, and third dichroic mirror planes 321, 322, and 323 have different sizes. When the sizes of the first, second, and third dichroic mirror planes 321, 322, and 323 are $A_1$, $A_2$, and $A_3$, respectively, they can satisfy a relationship, $A_1 \geq A_2 > A_3$ or $A_1 > A_2 \geq A_3$, for example. As shown in Figure 18, the first and second polarized beam splitters 316 and 317 may be installed in front of the single prism 313. The 1/2 wavelength plate 324 may be installed between the first or second polarized beam splitter 316 or 317 and the single prism 313.

As shown in Figure 20, white light I emitted from the light source 310 passes through the collimating lens 314 and is incident upon the light pipe 315". A first colour beam $I_1$ among the incident white light I is reflected by the first dichroic mirror plane 321, and the other second and third colour beams $I_2$ and $I_3$ are transmitted thereby. The second colour beam $I_2$ is reflected by the second dichroic mirror plane 322, and the third colour beam $I_3$ is transmitted thereby. The third colour beam $I_3$ is reflected by the third dichroic mirror plane 323. Because the fist, second, and third dichroic mirror planes 321, 322, and 323 have different sizes, the first, second, and third colour beams $I_1$, $I_2$, and $I_3$ with different amounts are reflected thereby.

As described above, each of the light pipes 315, 315', and 315" can control the amount of each colour light emitted therefrom, so the colour temperature and colour gamut of an image can be controlled.

The red, green, and blue colour beams $I_1$, $I_2$, and $I_3$, into which the white light has been separated by each of the light pipes 315, 315', and 315", are scanned by the scanning unit 330.

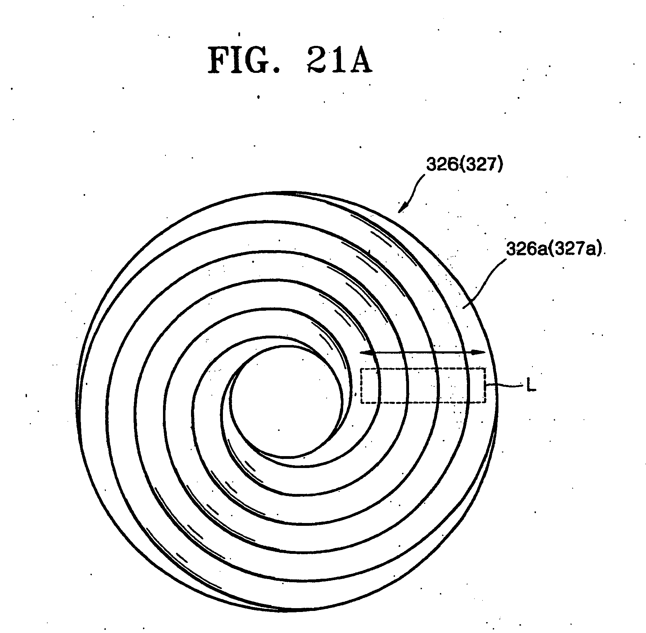

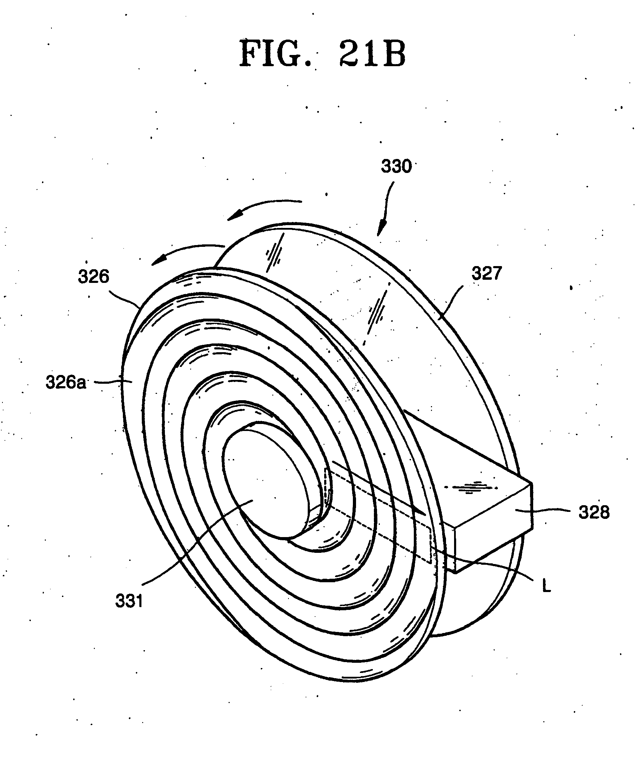

Referring to Figure 21A and 21B, the scanning unit 330 includes first and second spiral lens disks 326 and 327 a predetermined distance apart from each other, and a glass rod 328 installed between the first and second spiral lens disks 326 and 327. The first and second spiral lens disks 326 and 327 are formed by spirally arranging cylindrical lens cells 326a and 327a, respectively, on at least one side of each of the first and second spiral lens disks 326 and 327. The cross-section of each of the first and second spiral lens disks 326 and 327 looks like a cylindrical lens array. The first and second spiral lens disks 326 and 327 are rotated at a uniform speed.

Referring back to Figure 16, first and second cylindrical lenses 325 and 331 are installed in front of the first spiral lens disk 326 and behind the second spiral lens disk 327, respectively. The first and second cylindrical lenses 325 and 331 can be replaced by first and second optical diffraction elements that each have a diffraction pattern designed to focus an incident beam so that the cross-section of the incident beam is only reduced in one direction.

First and second fly-eye lens arrays 333 and 335 and a relay lens 338 can be further installed on a light path between the second spiral lens disk 327 and the light valve 340. The first and second fly-eye lens arrays 333 and 335 include a two-dimensional array of convex portions 333a and a two-dimensional array of convex portions 335a, respectively. Each of the arrays of convex portions 333a and 335a is formed on the incidence surface and/or emission surface of each of the first and second fly-eye lens arrays 333 and 335. The projection lens unit 345 magnifies an image formed by the light valve 340 and projects the magnified image onto the screen 350.

As described above, the projection system of the present invention adopts the light pipes 315, 315', and 315". However, they can be applied to any projection system as long as they can form an image due to scanning.

The operational relationship between each of the light pipes 315, 315', and 315" and the projection system of Figure 16 will now be described with reference to Figure 16. Referring to Figure 16, first, white light emitted from the light source 310 passes through the collimating lens 314 and is then incident upon each of the light pipes 315, 315', and 315".

Each of the light pipes 315, 315', and 315" separates the incident white beam into the red, green, and blue colour beams $I_1$, $I_2$, and $I_3$ with different cross-section areas and different light amounts. Light made up of the red, green, and blue colour beams $I_1$, $I_2$, and $I_3$ is narrowed in cross-section while passing through the first cylindrical lens 325. The light with a narrowed cross-section is incident upon the first spiral lens disk 326. Thereafter, the light passes through the glass rod 328 and is then incident upon the second spiral lens disk 327. The glass rod 328 and the second spiral lens disk 327 prevent divergence of the light transmitted by the first spiral lens disk 326.

The glass rod 328 plays two roles. Firstly, the glass rod 328 delivers the light transmitted by the first spiral lens disk 326 to the second spiral lens disk 327 without being diverged. Secondly, the glass rod 328 emits the incident light without changing as a light guide does.

As the first and second spiral lens disks 326 and 327 rotate a constant speed while the red, green, and blue beams $I_1$, $I_2$, and $I_3$ are passing through the scanning unit 330, an effect where the positions of the red, green, and blue beams $I_1$, $I_2$, and $I_3$ look to be continuously and periodically changing can be obtained.

Since the principle of forming an image due to scanning was described above with reference to Figures 10, 11, and 12, it will not be described here in detail.

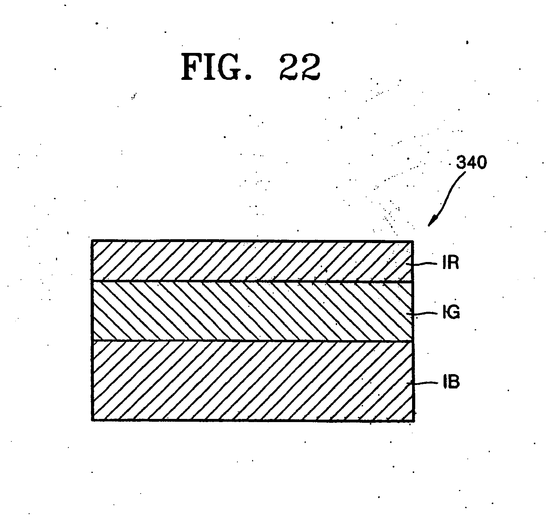

As shown in Figure 22, colour bars with different cross-section areas are formed on the light valve 340 by each of the light pipes 315, 315', and 315". For example, a red bar IR can be formed on the upper part of the light valve 340, a green bar IG can be formed on the middle part of the light valve 340, and a blue bar IB can be formed on the lower part of the light valve 340. When the cross-section areas of the red, green, and blue bars IR, IG, and IB are $S_{IR}$, $S_{IG}$, and $S_{IB}$, respectively, at least two of the cross-section areas $S_{IR}$, $S_{IG}$, and $S_{IB}$ can be different. For example, the cross-section areas $S_{IR}$, $S_{IG}$, and $S_{IB}$ can satisfy the relationship of $S_{IR} \leqq S_{IG} < S_{IB}$ or $S_{IR} < S_{IG} \leqq S_{IB}$ or its inverse relationship of $S_{IR} \geq S_{IG} > S_{IB}$ or $S_{IR} > S_{IG} \geq S_{IB}$.

The cross-section areas of the colour bars vary depending on the areas of the first dichroic mirror planes 318a and 321, second dichroic mirror planes 319a and 322, and third dichroic mirror planes 320a and 323 of the light pipes 315, 315', and 315".

As described above, the areas of the formed colour bars are different, so the colour gamut and colour temperature of an image obtained from the colour bars vary. Thus, various colours or moods of the image can be produced.

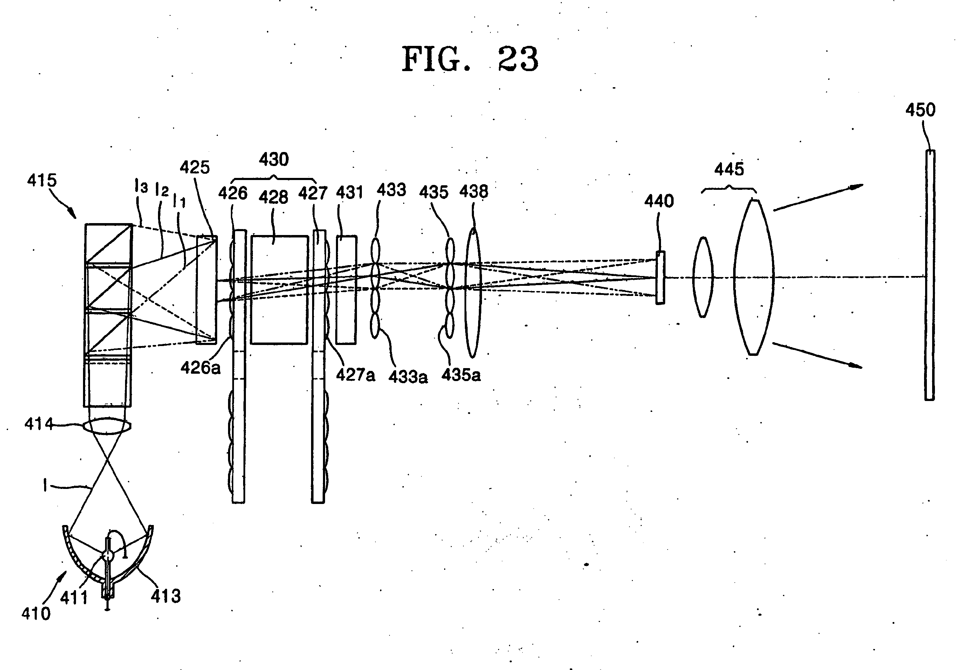

Figure 23 shows an optical configuration of a projection system. Referring to Figure 23, the projection system includes a light source 410, a light pipe 415, a scanning unit 430, and a light valve 440. The light pipe 415 separates light emitted from the light source 410, according to colour. The scanning unit 430 scrolls red, green, and blue beams, into which the light emitted from the light source 410 has been separated by the light pipe 415. The light valve 440 forms an image by processing the scanning red, green, and blue beams according to an image signal.

The light source 410 produces and emits white light and includes a lamp 411 for generating light and a reflection mirror 413 for reflecting light emitted from the lamp 411 and guiding the path of the reflected light. The reflection mirror 413 may be an elliptic mirror whose first focal point is the position of the lamp 411 and a second focal point is a point where light is focused. Alternatively, the reflection mirror 413 may be a parabolic mirror which uses the lamp 411 as a focal point and is designed so that light beams that are emitted from the lamp 61 and reflected by the parabolic mirror are collimated. The reflection mirror 413 shown in Figure 23 is an elliptic mirror. When a parabolic mirror is used as the reflection mirror 413, a lens for focusing light must be further included.

A collimating lens 414 for collimating incident light is installed on a light path between the light source 410 and the light pipe 415. Preferably, given that P denotes the distance between the light source 410 and the focal point f where light emitted from the light source 410 is focused, the collimating lens 414 is installed P/5 apart from the focal point f. By installing a projection system in this way, the etendue of the projection system, which denotes an optical conservation quantity, can be reduced, so the structure of an optical system can be made more compact and easily formed.

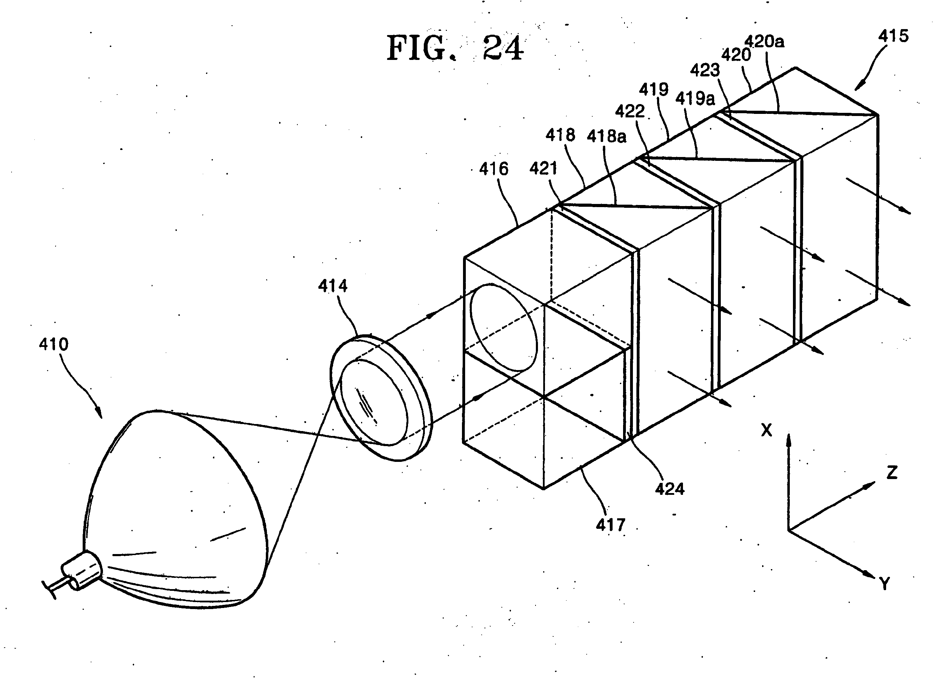

As shown in Figure 24, the light pipe 415 includes a first polarized beam splitter 416 for reflecting light with one polarization direction and at the same time transmitting light with the other polarization direction, a second polarized beam splitter 417 installed below the first polarized beam splitter 416, and third, fourth, and fifth polarized beam splitters 418, 419, and 420 installed adjacent to the first and second polarized beam splitters 416 and 417.

A first colour selection polarizer 421 for changing the polarization direction of light with a particular wavelength is installed between the first and third polarized beam splitters 416 and 418. A second colour selection polarizer 422 is installed between the third and fourth polarized beam splitters 418 and 420. A 1/2 wavelength plate or a third colour selection polarizer 423 for changing the polarization direction of incident light is installed between the fourth and fifth polarized beam splitters 419 and 420. A 1/2 wavelength plate 424 for changing the polarization direction of incident light is installed between the second polarized beam splitter 417 and the first colour selection polarizer 421.

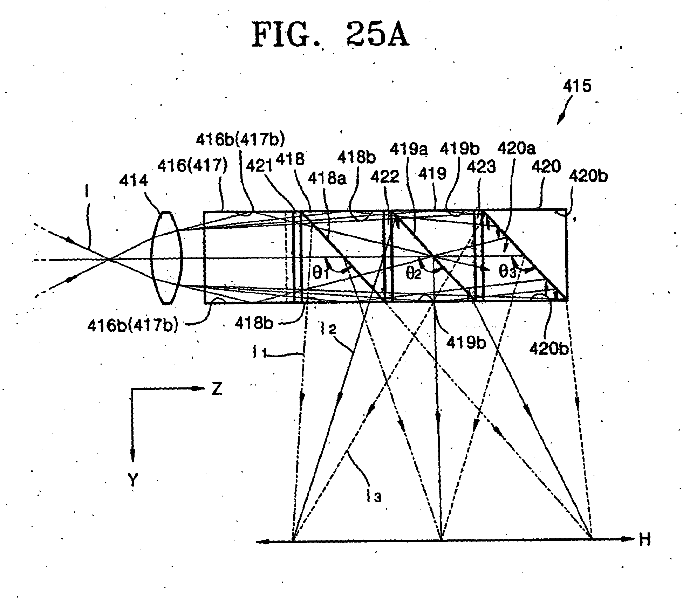

Referring to Figure 25A, the third, fourth, and fifth polarized beam splitters 418, 419, and 420 have first, second, and third mirror planes 418a, 419a, and 420a, respectively, which are inclined at angles $\theta_1$, $\theta_2$, and $\theta_3$, respectively, with respect to the axis of incident light. The angles $\theta_1$, $\theta_2$, and $\theta_3$ satisfy Equation 2:

$$\theta_1 \geq \theta_2 \geq \theta_3 \qquad \ldots (2)$$

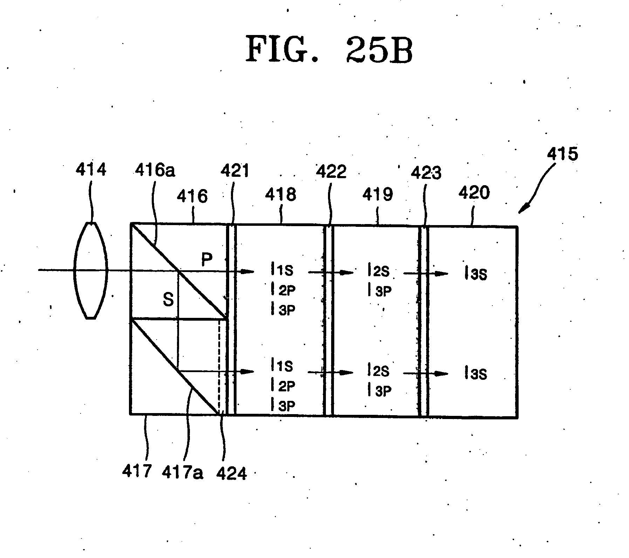

As shown in Figure 25B, the first polarized beam splitter 416 transmits light with one polarization direction, for example, P-polarized light, among incident white light and at the same time reflects S-polarized light. The first colour selection polarizer 421 changes the polarization direction of only light in a particular wavelength range among the P-polarized light transmitted by the first polarized beam splitter 416. More specifically, the first colour selection polarizer 421 changes the P-polarization direction of only first colour light to an S-polarization direction so as to obtain first S-polarized colour light $I_{1S}$ while maintaining the P-polarization direction of each of second and third P-polarized colour light $I_{2P}$ and $I_{3P}$. The first S-polarized colour light $I_{1S}$ is reflected by the third polarized beam splitter toward the outside of the light pipe 415.

The second and third P-polarized colour light $I_{2P}$ and $I_{3P}$ passes through the third polarized beam splitter 418 and is then incident upon the second colour selection polarizer 422. The second colour selection polarizer 422 changes the P-polarization direction of the second colour light $I_{2P}$ to an S-polarization direction so as to obtain second S-polarized colour light $I_{2S}$ while maintaining the P-polarization direction of the third colour light $I_{3P}$. The second S-polarized colour light $I_{2S}$ is reflected by the fourth polarized beam splitter 419 toward the outside of the light pipe 415. The third P-polarized colour light $I_{3P}$ transmitted by the fourth polarized beam splitter 419 is incident upon the third colour selection polarizer 423, and its polarization direction is changed to an S-polarization direction to obtain third S-polarized colour light $I_{3S}$. The third S-polarized colour light $I_{3S}$ is reflected by the fifth polarized beam splitter 420. In this way, light I emitted from the light source 410 is separated into first, second, and third colour beams $I_1$, $I_2$, and $I_3$ by the light pipe 415.

The light pipe 415 is constituted with the first through fifth polarized beam splitters 416 through 420, the first through third colour selection polarizers 421 through 423, and the 1/2 wavelength plate 424. Preferably, the light pipe 415 having such a structure includes total reflection planes 416b, 417b, 418b, 419b, and 420b for total-reflecting light that is incident at a predetermined angle, that is, a critical angle or greater. The total reflection planes 416b, 417b, 418b, 419b, and 420b are provided on external planes of the first, second, third, fourth, and fifth polarized beam splitters 416, 417, 418, 419, and 420, respectively, other than the incidence and emission planes thereof.

The total reflection planes 416b, 417b, 418b, 419b, and 420b reduce a loss in light hat travels within the light pipe 415, thereby increasing light efficiency. Light that is incident upon the total reflection planes 416b, 417b, 418b, 419b, and 420b after being reflected at least one time within the first, second, third, fourth, and fifth polarized beam splitters 416, 417, 418, 419, and 420 is not total-reflected but transmitted by the total reflection planes 416b, 417b, 418b, 419b, and 420b because the incidence angle of the light is smaller than the critical angle.

Referring back to Figure 23, the scanning unit 430 includes first and second spiral lens disks 426 and 427 a predetermined distance apart from each other, and a glass rod 428 installed between the first and second spiral lens disks 426 and 427, similar to the structure of the scanning unit 330 as shown in Figures 21A and 21B. The first and second spiral lens disks 426 and 427 are formed by spirally arranging cylindrical lens cells 426a and 427a, respectively, on at least one side of each of the first and second spiral lens disks 426 and 427. The cross-section of each of the first and second spiral lens disks 426 and 427 looks like a cylindrical lens array.

First and second cylindrical lenses 425 and 431 are installed in front of the first spiral lens disk 426 and behind the second spiral lens disk 427, respectively. The first and second cylindrical lenses 425 and 431 can be replaced by first and second optical diffraction elements that each have a diffraction pattern designed to focus an incident beam so that the cross-section of the incident beam is only reduced in one direction.

First and second fly-eye lens arrays 433 and 435 and a relay lens 438 can be further installed on a light path between the second spiral lens disk 427 and the light valve 440. The first and second fly-eye lens arrays 433 and 435 include a two-dimensional array of convex portions 433a and a two-dimensional array of convex portions 435a, respectively. Each of the arrays of convex portions 433a and 435a is formed on the incidence surface and/or emission surface of each of the first and second fly-eye lens arrays 433 and 435. The projection lens unit 445 magnifies an image formed by the light valve 440 and projects the magnified image onto a screen 450.

A colour illumination system of the projection system includes the light source 410, the light pipe 415 for separating light emitted from the light source 410, according to colour, and the scanning unit 430 for scanning red, green, and blue beams, into which the light emitted from the light source 410 has been separated by the light pipe 415, so as to continuously change the paths of the red, green, and blue beams. The colour illumination system may further include the first and second cylindrical lenses 425 and 431 and the first and second fly-eye lens arrays 433 and 435 so as to achieve highly-efficient scanning of the light emitted from the light source 410. The first and second cylindrical lenses 425 and 431 are respectively installed in front of and behind the scanning unit 430, and the first and second fly-eye lens arrays 433 and 435 enable the red, green, and blue beams transmitted by the scanning unit 430 to land on three respective colour areas of the light valve 440 to form colour bars.

The first and second cylindrical lenses 425 and 431 converge or diverge an incident beam so that the cross-section of the incident beam is only reduced in one direction. To reduce the thickness of each of the first and second cylindrical lenses 425 and 431, an optical diffraction element or a cylindrical lens array can be used as each of the first and second cylindrical lenses 425 and 431.

The operational relationship between the colour illumination system having such a structure and the projection system will now be described with reference to Figures 23, 25A, and 25B. First, white light I emitted from the light source 410 passes through the collimating lens 414 and is then incident upon the light pipe 415, which includes the first, second, and third selection polarizers 421, 422, and 423.

Referring to Figures 25A and 25B, the first colour selection polarizer 421, for example, a Y/blue colour selection polarizer, changes the polarization direction of light with a blue wavelength while maintaining the polarization direction of light with a yellow (Y) wavelength. In other words, the first colour selection polarizer 421 changes the polarization direction of only the light with a blue wavelength while maintaining the polarization direction of light with the other wavelengths. The second colour selection polarizer 422, for example, a C/red colour selection polarizer, changes the polarization direction of light with a red wavelength while maintaining the polarization direction of light with a cyan (C) wavelength. In other words, the second colour selection polarizer 422 changes the polarization direction of only the light with an red wavelength while maintaining the polarization direction of light with the other wavelengths. The third colour selection polarizer 423, for example, a green/M colour selection polarizer, changes the polarization direction of light with a green wavelength while maintaining the polarization direction of light with a magenta (M) wavelength. In other words, the third colour selection polarizer 423 changes the polarization direction of only the light with a green wavelength while maintaining the polarization direction of light with the other wavelengths.

As described above, the unpolarized white light I is incident upon the light pipe 415 including the first, second, and third colour selection polarizers 421, 422, and 423. More specifically, first, the first polarized beam splitter 416 receives the unpolarized white light I and reflects S-polarized light among the incident light I while transmitting P-polarized light. Thereafter, the first (Y/blue) colour selection polarizer 421 changes light with the blue wavelength among the P-polarized light to S-polarized blue light while maintaining the P polarization state of the light with the other wavelengths. Then, the third polarized beam splitter 418 reflects the S-polarized blue light and at the same time transmits P-polarized red light and P-polarized green light to the second (C/red) colour selection polarizer 422.

Next, the second (C/red) colour selection polarizer 422 changes the P-polarized red light to S-polarized red light and at the same time maintains the P polarization state of the green light. Then, the fourth polarized beam splitter 419 reflects the S-polarized red light and at the same time transmits the P-polarized green light to the third (green/M) colour selection polarizer 423.

The third (green/M) colour selection polarizer 423 changes the P-polarized green light to S-polarized green light, which is reflected by the fifth polarized beam splitter 420. The third colour selection polarizer 423 can be replaced by a 1/2 wavelength plate which changes the polarization direction of light.

The S-polarized light reflected by the first polarized beam splitter 416 is reflected by the second polarized beam splitter 417 toward the 1/2 wavelength plate 424. The 1/2 wavelength plate 424 changes the S-polarized light to P-polarized light. The first colour selection polarizer 421 receives the P-polarized light and changes blue light among the P-polarized light to S-polarized blue light while maintaining the P-polarization states of red and green light. The S-polarized blue light is reflected by the third polarized beam splitter 418 and the P-polarized red light and the P-polarized green light are transmitted thereby toward the second colour selection polarizer 422.

Then, the P-polarized red light is changed to S-polarized red light by the second colour selection polarizer 422, and the S-polarized red light is reflected by the fourth polarized beam splitter 419. At the same time, the P-polarization state of the green light is maintained by the second colour selection polarizer 422 and transmitted by the fourth polarized beam splitter 419.

Thereafter, the P-polarized green light is changed to S-polarized green light by a 1/2 wavelength plate or the third colour selection polarizer 423, and the S-polarized green light is reflected by the fifth polarized beam splitter 420.

In Figure 25A, reference character H denotes an image plane on which red, green, and blue colour beams land.

In this way, red, green, and blue colour beams are reflected by the first, second, and third polarized beam splitters 418, 419, and 420, respectively. The cross-section of light made up of the red, green, and blue colour beams is reduced by the first cylindrical lens 425, and the red+green+blue light with a narrowed cross-section is incident upon the first spiral lens disk 426.

Then, light transmitted by the glass rod 428 is incident upon the second spiral lens disk 427. The glass rod 428 and the second spiral lens disk 427 prevent further divergence of the light transmitted by the first spiral lens disk 426.

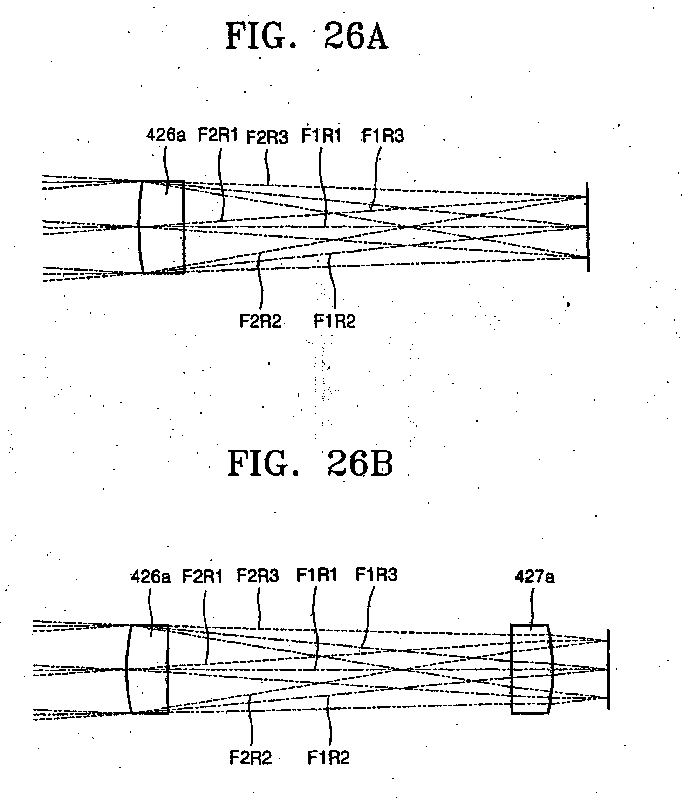

The prevention of further divergence of light by the second spiral lens disk 427 can be seen with reference to Figures 26A and 26B. Figures 26A and 26B show the results of simulations performed on the divergent angles of light transmitted by the first spiral lens disk 426 in a first case where no second spiral lens disks 427 are installed and in a second case where the second spiral lens disk 427 is installed, respectively. In Figures 25A and 25B, only one lens cell 426a and only one lens cell 427a instead of the first and second spiral lens disks 426 and 427 are shown for simplicity.

Given that the numerical aperture (NA) of each of the lens cells 426a and 427a of Figures 26A and 26B is 0.104, Table 1 shows the divergent angles of beams with different wavelengths on an image plane.

[Table 1]

|  | Divergent angle of light in first case (°) | Divergent angle of light in second case (°) |
|---|---|---|
| F1R1 | 0 | 0 |
| F1R2 | 6.08241185604 | 6.02953862536 |
| F1R3 | 6.08241185604 | 6.02953862536 |
| F2R1 | 4.0 | 0.5895576931389 |
| F2R2 | 10.0290329291 | 6.54223989609 |
| F2R3 | 2.18773761515 | 5.5440169460 |

In Table 1, F1 denotes a sub-beam that travels at the centre among sub-beams in different paths that constitute a beam with a wavelength, and F2 denotes one of the other two sub-beams at both sides of the centre sub-beam. Because the two sub-beams at both sides of the centre sub-beam are symmetrical, only one of the two sub-beams is shown in Figures. 26A and 26B. It can be seen from Table 1 that the divergent angles of the sub-beams F1 and F2 in the second case where the second spiral lens disk 427 is installed are less than those in the first case where no second spiral lens disks 427 are installed.

When the glass rod 428 is installed between the first and second spiral lens disks 426 and 427, it enables the light transmitted by the first spiral lens disk 426 to be delivered to the second spiral lens disk 427 without being further diverged. At the same time, the glass rod 428 plays a role of a light guide by emitting incident light without changing.

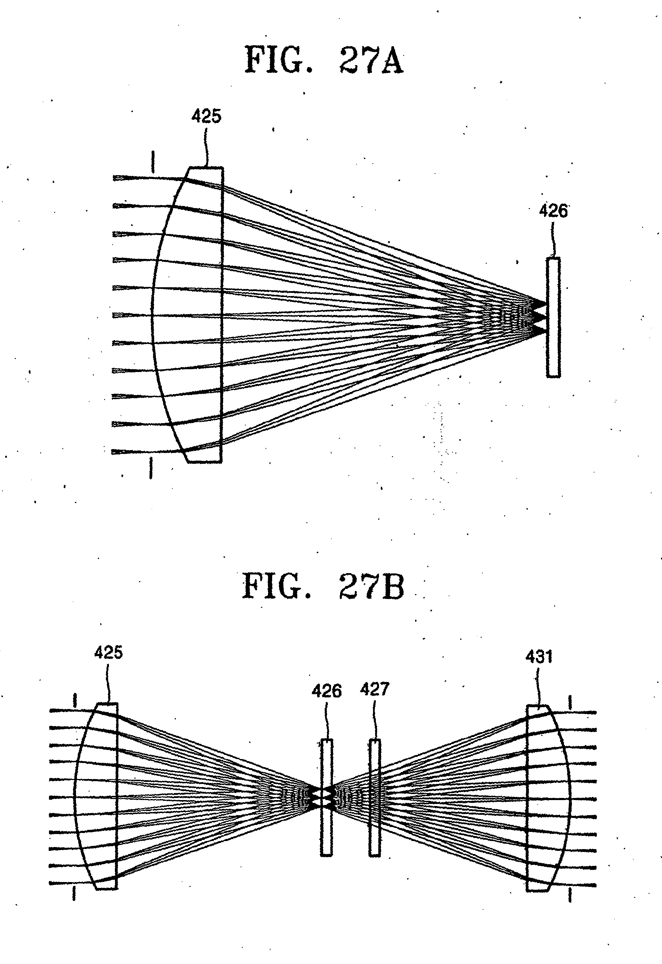

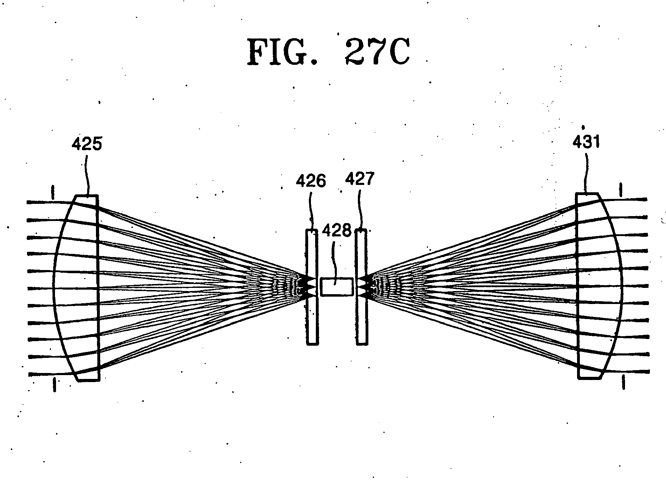

Figure 27A shows a case where light transmitted by the first cylindrical lens 425, which has a ±2° field, is focused on the first spiral lend disk 426. The light focused on the first spiral lens disk 426 has a 8mm cross-section. Figure 27C shows the path of light that passes through the first cylindrical lens 425, the first and second spiral lens disks 426 and 427, and the second cylindrical lens 431 in the case where no glass rods 428 are installed. In this case, the light focused on the first spiral lens disk 426 has a cross-section of about 8mm, and the light focused on the second spiral lens disk 427 has a cross-section of about 26mm.

When the cross-section areas of light focused on the first and second spiral lens disks 426 and 427 are different as described above, the light diverges at a large divergent angle and is then focused on the second cylindrical lens 431. To overcome this large divergence, as shown in Figure 27C, the glass rod 428 is installed between the first and second spiral lens disks 426 and 427 and equalizes the cross-section areas of light focused on the first and second spiral lens disks 426 and 427. The glass rod 428 may be about 20mm in length. Hence, the glass rod 428 reduces the divergent angle of light, thereby reducing light loss.

Since the scanning of the scanning unit 430 having such a structure is the same as the scanning of the scanning unit 90 described with reference to Figures 11 to 12, it will not be described in greater detail.

When the first and second spiral lens disks 426 and 427 rotate at a constant speed, colour scanning is achieved. The glass rod 428 is fixed between the first and second spiral lens disks 426 and 427.

When red, green, and blue colour beams pass through the first spiral lens disk 426, it appears from the point of view of beams L that the first spiral lens disk 426 continuously moves up and down at a uniform speed. Hence, an effect where the positions of the beams transmitted by the first spiral lens disk 426 look to be continuously changing can be produced.

First, the red, green, and blue colour beams pass through the first spiral lens disk 426, the glass rod 428, the second spiral lens disk 427, the second cylindrical lens 431, the first and second fly-eye lens arrays 433 and 435, and the relay lens 438 and form colour bars on the light valve 440 in an red, green, and blue order. Next, as the first and second spiral lens disks 426 and 427 rotate, the lens surfaces of the first and second spiral lens disk 426 and 427 gradually move up while the red, green, and blue colour beams pass through the first and second spiral lens disks 426 and 427. As the first and second spiral lens disks 426 and 427 move, colour bars are formed in a green, blue, and red order. Then, as the first and second spiral lens disks 426 and 427 rotate, colour bars are formed in a blue, red, and green order. Such scanning of the red, green, and blue beams repeats as the first and second spiral lens disks 426 and 427. In other words, the locations of lenses upon which the red, green, and blue beams are incident change according to the rotations of the first and second spiral lens disks 426 and 427, and the rotations of the first and second spiral lens disks 426 and 427 are converted into a rectilinear motion of a cylinder lens array at the cross-sections of the first and second spiral lens disks 426 and 427 so that scanning is performed.

Since the first and second spiral lens disks 426 and 427 continuously rotate in one direction without changing the rotation direction in order to perform scanning, continuity and consistency can be guaranteed. In addition, scanning using the single spiral lens disk 430 contributes to keep the speed of colour bars constant. Further, the first and second spiral lens disks 426 and 427 and the glass rod 428 contribute to reduce the divergent angles of the red, green, and blue beams, thereby reducing light loss.

Since red, green, and blue beams with cross-sections narrowed by the first cylindrical lens 425 pass through the first and second spiral lens disks 426 and 427, the effect of beams passing through a cylinder lens array that moves rectilinearly can be obtained. The second cylindrical lens 431 receives the red, green, and blue beams with narrowed cross-sections from the second spiral lens disk 427 and turns the narrowed cross-sections of the received beams into its original state, such that the received beams are collimated.

Thereafter, red, green, and blue beams transmitted by the second cylindrical lens 431 are focused on three respective colour areas of the light valve 440 by the first and second fly-eye lens arrays 433 and 435. For example, red beams are overlapped on the upper area of the light valve 440, green beams are overlapped on the middle area of the light valve 440, and blue beams are overlapped on the lower area of the light valve 440, thereby forming individual colour bars. If no first and second fly-eye lens arrays 433 and 435 are installed, the red, green, and blue beams land on individual pixels of the light valve 440, and red, green, and blue beams in each pixel are scanned. The scanning of red, green, and blue beams in each pixel cannot be easily controlled, increases the probability that errors occur, and may degrade the quality of image. However, in the present invention, red, green, and blue beams are focused on three respective colour areas of the light valve 440 by the first and second fly-eye lens arrays 433 and 435, thereby forming colour bars. The colour bars are scanned. Scrolling the colour bars is easy.

Also, the first and second fly-eye lens arrays 433 and 435 cause the light valve 440 to emit light with uniform intensity.

The relay lens 438 delivers beams transmitted by the first and second fly-eye lens arrays 433 and 435 to a predetermined location, for example, to the light valve 440. The number of cylinder lens cells 426a (427a) on the first (second) spiral lens disk 426 (427) can be controlled to synchronize the rotating frequency of the first (second) spiral lens disk 426 (427) with the operating frequency of the light valve 440. That is, if the operating frequency of the light valve 440 is high, more lens cells are included so that the scanning speed can be controlled to be faster while keeping the rotation speed of the first (second) spiral lens disk 426 (427) constant.

Alternatively, the first (second) spiral lens disk 426 (427) can be synchronized with the light value 440 by maintaining the number of lens cells on the first (second) spiral lens disk 426 (427) uniform and increasing the rotation frequency of the first (second) spiral lens disk 426 (427). For example, when the operating frequency of the light valve 440 is 960Hz, that is, when the light valve 440 operates at 1/960 of a second per frame such that 960 frames are reproduced per second, the first (second) spiral lens disk 426 (427) can be constructed as follows. The outermost diameter of the first (second) spiral cylinder lens array 426 (427) is 140mm, the innermost diameter is 60mm, the number of spiral lens cells 426a (427a) is 32, the width of each spiral lens cell 426a (427a) is 5.0mm, and the radius of curvature of each spiral lens cell 426a (427a) is 24.9mm. In this structure, if the first (second) spiral lens disk 426 (427) reproduces 32 frames per one rotation, it must rotate 30 times per second in order to reproduce 960 frames per second. At this speed, the first (second) spiral lens disk 426 (427) must rotate 1800 times for 60 seconds, and accordingly it has a rotation speed of 1800rpm. When the operating frequency of the light value 440 is increased by half and thus the light valve operates at 1440Hz, the first (second) spiral lens disk 426 (427) must rotate at a 2700rpm speed in order to be synchronized with the increased operating frequency of the light valve 440.

A single-plate projection system according to the present invention can maximize light efficiency by using the scanning unit 430.

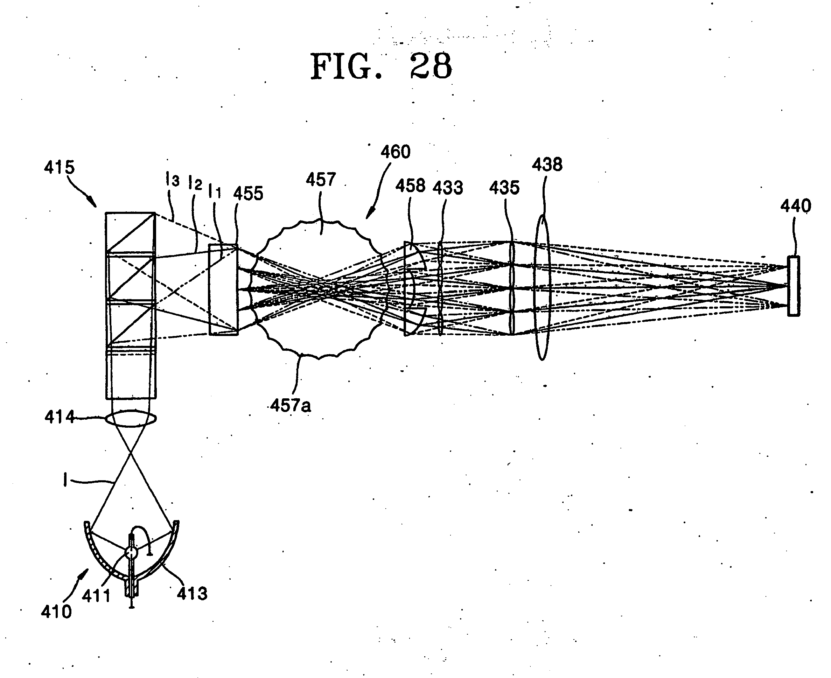

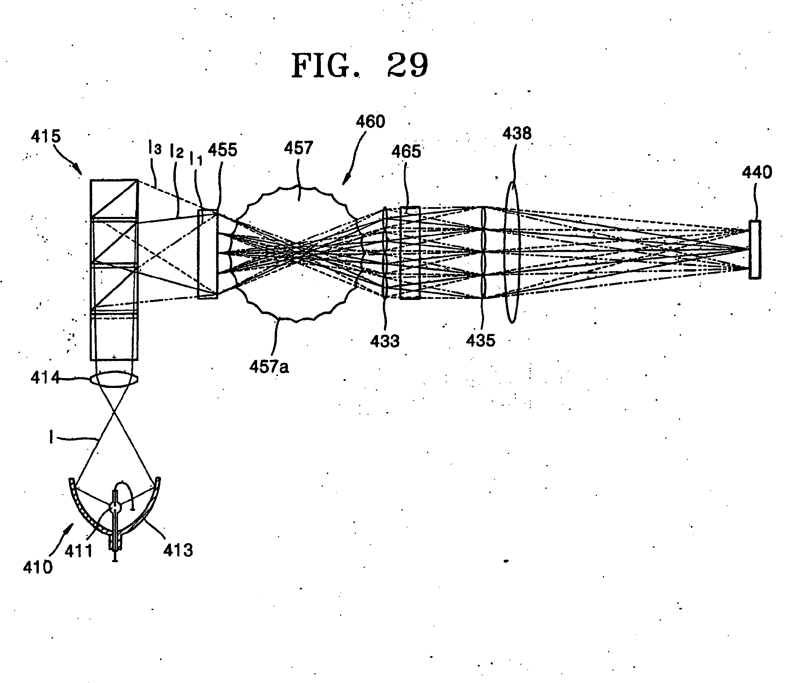

A modification of each of the light pipe, the colour illumination system, and the projection system of the example shown in Figure 23 will now be described with reference to Figures 28 and 29.

Referring to Figure 28, a modification of the projection system of Figure 23 includes the light source 410, the light pipe 415 for separating light emitted from the light source 410 according to colour, a scanning unit 460 for scanning colour beams, into which the light has been separated by the light pipe 415, and the light valve 440 for forming an image by processing the scanning colour beams according to an image signal.

The projection system of Figure 28 is the same as that of Figure 23 except that the scanning unit 460 is adopted.

Since the elements of Figure 28 designated by the same reference numerals as those of Figure 23 perform the same functions, they will not be described here.

As shown in Figure 28, the scanning unit 460 includes a cylindrical lens array 457 rotatably installed on a light path and a driving source 459 for rotating the cylindrical lens array 457.

The cylindrical lens array 457 is a cylinder on which a plurality of cylindrical lenses 457a are arranged. The cylindrical lenses 457a independently converge or diverge incident light. Instead of being formed of geometrically concave cylindrical lenses 457a, the cylindrical lens array 457 can be a plate on which a diffraction pattern that can converge or diverge incident light is formed.

The cylindrical lens array 457 is rotated by the driving source 459, which is a typical rotation-driving device, such as, a motor or the like. Since the structure of the rotation-driving device is well known, it will not be described here in detail. The cylindrical lens array 457 is disposed so that the cylindrical lenses 457a can face first and second focusing lenses 455 and 458. As the cylindrical lens array 457 rotates, the cylindrical lenses 457a are scanned while gradually moving up or down. An effective surface of the cylindrical lens array 457 that contributes to the scanning of the cylindrical lenses 457a performed with the rotation of the cylindrical lens array 457 is the surface that face each of the first and second focusing lenses 455 and 458. As described above, the cylindrical lens array 457 provides an effect where two plate-type cylindrical lens arrays look to operate.

A modification of the colour illumination system achieves colour scanning by using the light source 410, the light pipe 145, and the scanning unit 460. Preferably, the modified colour illumination system further includes the first and second focusing lenses 455 and 458, the first and second fly-eye lens arrays 433 and 435, and the relay lens 438,

The first and second focusing lenses 455 and 458 are disposed such as to face some of the cylindrical lenses 457a of the cylindrical lens array 457. Each of the first and second focusing lenses 455 and 458 may be a half cylindrical lens.

Since the second focusing lens 458 has substantially the same structure as the focusing lens of Figure 14, it will not be described here in greater detail.

As shown in Figure 29, a second focusing lens 465 instead of the second focusing lens 458 is installed between the first and second fly-eye lens arrays 433 and 435. The second focusing lens 465 may be a cylindrical lens array.

In the modified projection system, colour beams, into which light has been separated by the light pipe 415, land on the light valve 440 so that beams of the same colour are overlapped thereon by using the first and second fly-eye lens arrays 433 and 435, thereby forming colour bars. The colour bars are scanned by using the scanning unit 460, thereby forming an image.

The light pipes can separate incident light into colour beams according to a wavelength range and also make full use of the incident light by reflecting beams that are incident at angles greater than a critical angle so that the beams can travel within the light pipes. Thus, the light use efficiency can be increased. Also, colour separation units have different sizes according to colour so as to differentiate the amounts of light of different colours, so various colour gamuts and different colour temperatures can be obtained. In other words, each of the light pipes have different-sized dichroic mirror planes so as to control the colour temperature and to produce various moods of a colour image.

Further, the light pipes can increase light efficiency by separating incident light according to colour so as to achieve colour scanning and using both P-polarized light and S-polarized light as effective light.

Each of the colour illumination systems of the aforementioned embodiments of the present invention and examples includes a single scanning unit through which colour beams pass. Thus, the optical configuration of a projection system can be simplified, and light loss can be reduced. In addition, each of the colour illumination systems uses a single scanning unit to perform scanning, so the optical configuration of a projection system is simplified. Also, since the colour illumination systems form colour bars, different colour images can be produced by controlling the colour bars, and accordingly, the quality of a colour image can be improved.

Since the projection systems of the aforementioned embodiments of the present invention and examples are single-panel projection systems, its optical configuration can be simplified, and the number of components for achieving scanning is reduced. Thus, a light, low-price projection system can be obtained. Since the single-panel projection systems according to the present invention scan colour bars by using a scanning unit, they can obtain the same light efficiency as the light efficiency of a three-panel projection system. More specifically, each of the single-panel projection systems separates white light into red, green, and blue beams at one time and scrolls the three colour beams to form a colour image. Therefore, the single-panel projection systems can obtain the same light efficiency as the light efficiency of a three-panel projection system.

**Claims**

1. A colour video projector including:

a beam splitter (315) comprising:

a first dichroic mirror plane (321) reflecting first colour light ($I_1$) among said light (I) while transmitting second and third colour light ($I_2$, $I_3$);

a second dichroic mirror plane (322) which is installed on the path of second and third colour light ($I_2$, $I_3$) transmitted by the first dichroic mirror plane (321), has an area equal to or different than an area of the first dichroic mirror plane (321), and reflects the second colour light ($I_2$) while transmitting the third colour separated light ($I_3$); and

a third dichroic mirror plane (323) which is installed on the path of the third colour light ($I_3$) transmitted by the second dichroic mirror plane (322), has an area different from at least one of the areas of the first and second dichroic mirror planes (321, 322), and reflects the third colour light ($I_3$);

first and second focusing means (325,331) comprising either cylindrical lenses or optical diffraction elements which focus an incident beam so that the cross-section of the incident beam is reduced in only one direction;

input and output moveable cylindrical lens array means (326, 328, 327) located between the first and second focusing means (325, 331); and

actuator means for moving the cylindrical lens array means (326, 328, 327);

wherein the first focusing means (325) is positioned to receive the colour-separated light (L1, L2, L3) from the beam splitter (315); and

operation of the actuator means produces distinct scanning substantially monochrome bars from the colour-separated light (L1, L2, L3) from the beam splitter (315); **characterised in that** the cylindrical lens array means comprises:

a first spiral lens disk (326) which includes a plurality of cylindrical lens cells (326a) that are spirally arranged and is designed to be able to rotate;

a second spiral lens disk (327) which is installed opposite to the first spiral lens disk (326) and designed so as to rotate at the same speed as the first spiral lens disk (326); and

a glass rod (328) installed between the first and second spiral lens disks.

2. The colour video projector of claim 1, wherein the first, second and third dichroic mirror planes (318a, 319a, 320a) are included in first, second, and third dichroic prisms (318, 319, 320) respectively.

3. The colour video projector of claim 2, wherein the first, second, and third dichroic prisms are incorporated to form one body (313).

4. The colour video projector of any one of the preceding claims, further comprising:

a first polarized beam splitter (316) which is installed in front of the first dichroic mirror plane (318a) and transmits light with one polarization direction toward the first dichroic mirror plane (318a) while reflecting light with the other polarization direction toward a second polarized beam splitter (317);

the second polarized beam splitter (317), which is installed below the first polarized beam splitter (316) and re-reflects the light received from the first polarized beam splitter (316) toward the first dichroic mirror plane (318a); and

a 1/2 wavelength plate (324) which is installed between one of the first and second polarized beam splitters (316, 317) and the first dichroic mirror plane (318a).

5. The colour video projector of any one of the preceding claims, further comprising a collimating lens (314) which is installed between a light source (310) and the beam splitter (315) and collimates the light (I) to form a parallel beam.

6. The colour video projector of any one of the preceding claims
wherein the first focusing means is a cylindrical lens (325) which narrows the cross-section of the colour separated light ($I_1$, $I_1$, $I_3$) focused on the first spiral lens disk (326); and
the second focusing means is a cylindrical lens (331) which collimates incident colour separated light to form a parallel beam.

7. The colour video projector of any one of the preceding claims, further comprising first and second fly-eye lens arrays (333, 335) which cause light transmitted by the cylindrical lens array means (326, 327, 328) to land on a light valve (340) in such a way that beams of the same colour are overlapped on a corresponding colour area of the light valve (340).

**Patentansprüche**

1. Farbvideoprojektor, enthaltend:

einen Strahlenteiler (315), umfassend:

eine erste dichroitische Spiegelebene (321), die Licht erster Farbe ($I_1$) unter dem Licht (I) reflektiert, während sie Licht zweiter und dritter Farbe ($I_2$, $I_3$) durchlässt;
eine zweite dichroitische Spiegelebene (322), die in dem Weg des Lichts zweiter und dritter Farbe ($I_2$, $I_3$), das von der ersten dichroitischen Spiegelebene (321) durchgelassen wird, eingebaut ist, eine Fläche aufweist, die gleich einer oder verschieden von einer Fläche der ersten dichroitischen Spiegelebene (321) ist, und das Licht zweiter Farbe ($I_2$) reflektiert, während sie das getrennte Licht dritter Farbe ($I_3$) durchlässt; und
eine dritte dichroitische Spiegelebene (323), die in dem Weg des Lichts dritter Farbe ($I_3$), das von der zweiten dichroitischen Spiegelebene (322) durchgelassen wird, eingebaut ist, eine Fläche aufweist, die verschieden von mindestens einer der Flächen der ersten und zweiten dichroitischen Spiegelebene (321, 322) ist, und das Licht dritter Farbe ($I_3$) reflektiert;

erste und zweite Fokussierungsmittel (325, 331), umfassend entweder zylindrische Linsen oder optische Beugungselemente, die einen eintreffenden Strahl so fokussieren, dass der Querschnitt des eintreffenden Strahls in nur einer Richtung reduziert wird;
bewegliche zylindrische Eingangs- und Ausgangs-Linsenanordnungsmittel (326, 328, 327), die sich zwischen den ersten und zweiten Fokussierungsmitteln (325, 331) befinden; und
Betätigungsmittel zum Bewegen der zylindrischen Linsenanordnungsmittel (326, 328, 327);
wobei das erste Fokussierungsmittel (325) positioniert ist, um das farbgetrennte Licht (L1, L2, L3) von dem Strahlenteiler (315) zu empfangen; und
Operation des Betätigungsmittels deutliche, im Wesentlichen einfarbige Abtaststriche aus dem farbgetrennten Licht (L1, L2, L3) von dem Strahlenteiler (315) erzeugt; **dadurch gekennzeichnet, dass** das zylindrische Linsenanordnungsmittel umfasst:

eine erste Spirallinsenscheibe (326), die eine Vielzahl von zylindrischen Linsenzellen (326a) umfasst, die spiralförmig angeordnet sind, und die konstruiert ist, um drehbar zu sein;
eine zweite Spirallinsenscheibe (327), die der ersten Spirallinsenscheibe (326) gegenüberliegend eingebaut ist und konstruiert ist, um sich mit derselben Drehzahl wie die erste Spirallinsenscheibe (326) zu drehen; und
einen Glasstab (328), der zwischen der ersten und zweiten Spirallinsenscheibe eingebaut ist.

2. Farbvideoprojektor nach Anspruch 1, wobei die erste, zweite und dritte dichroitische Spiegelebene (318a, 319a, 320a) in ersten, zweiten bzw. dritten dichroitischen Prismen (318, 319, 320) enthalten sind.

3. Farbvideoprojektor nach Anspruch 2, wobei die ersten, zweiten und dritten dichroitischen Prismen inkorporiert sind, um einen Körper (313) zu bilden.

4. Farbvideoprojektor nach einem der vorstehenden Ansprüche, weiter umfassend:

einen ersten polarisierten Strahlenteiler (316), der vor der ersten dichroitischen Spiegelebene (318a) eingebaut ist und Licht mit einer Polarisationsrichtung hin zu der ersten dichroitischen Spiegelebene (318a) durchlässt, während er Licht mit der anderen Polarisationsrichtung hin zu einem zweiten polarisierten Strahlenteiler (317) reflektiert;
den zweiten polarisierten Strahlenteiler (317), der unter dem ersten polarisierten Strahlenteiler (316) eingebaut ist und das von dem ersten polarisierten Strahlenteiler (316) empfangene Licht hin zu der ersten dichroitischen Spiegelebene (318a) noch einmal reflektiert; und
eine 1/2-Wellenlängen-Platte (324), die zwischen einem des ersten und zweiten polarisierten Strahlenteilers (316, 317) und der ersten dichroitischen Spiegelebene (318a) eingebaut ist.

5. Farbvideoprojektor nach einem der vorstehenden Ansprüche, weiter umfassend eine Kollimationslinse (314), die zwischen einer Lichtquelle (310) und dem Strahlenteiler (315) eingebaut ist und das Licht (I) kollimiert, um einen parallelen Strahl zu bilden.

6. Farbvideoprojektor nach einem der vorstehenden Ansprüche, wobei das erste Fokussierungsmittel eine zylindrische Linse (325) ist, die den Querschnitt des farbgetrennten Lichts ($I_1$, $I_2$, $I_3$), das auf die erste Spirallinsenscheibe (326) fokussiert wird, verengt; und
das zweite Fokussierungsmittel eine zylindrische Linse (331) ist, die eintreffendes farbgetrenntes Licht kollimiert, um einen parallelen Strahl zu bilden.

7. Farbvideoprojektor nach einem der vorstehenden Ansprüche, weiter umfassend erste und zweite Facettenlinsenanordnungen (333, 335), die bewirken, dass Licht, das von dem zylindrischen Linsenanordnungsmittel (326, 327, 328) durchgelassen wird, auf einem Lichtventil (340) in einer derartigen Weise auftrifft, dass Strahlen derselben Farbe auf einer korrespondierenden Farbfläche des Lichtventils (340) überlappt werden.

**Revendications**

1. Projecteur vidéo en couleurs comportant :

   un séparateur de faisceau (315) comprenant :

   un premier plan de miroir dichroïque (321) qui réfléchit la lumière d'une première couleur ($I_1$) composant ladite lumière (I) et qui transmet la lumière d'une deuxième et d'une troisième couleur ($I_2$, $I_3$) ;
   un deuxième plan de miroir dichroïque (322) qui est installé dans le trajet de la lumière d'une deuxième et d'une troisième couleur ($I_2$, $I_3$) transmise par le premier plan de miroir dichroïque (321), qui possède une aire de surface égale à ou différente de l'aire de surface du premier plan de miroir dichroïque (321) et qui réfléchit la lumière d'une deuxième couleur ($I_2$) et transmet la lumière d'une troisième couleur séparée ($I_3$) ; et
   un troisième plan de miroir dichroïque (323) qui est installé dans le trajet de la lumière d'une troisième couleur ($I_3$) transmise par le deuxième plan de miroir dichroïque (322), qui possède une aire de surface différente de l'une au moins des aires de surface des premier et deuxième plans de miroir dichroïque (321, 322) et qui réfléchit la lumière d'une troisième couleur ($I_3$) ;

   des premiers et deuxièmes moyens de focalisation (325, 331) comprenant soit des lentilles cylindriques, soit des éléments de diffraction optiques qui focalisent un faisceau incident de telle façon que la section transversale du faisceau incident est réduite dans une seule direction ;
   des moyens de déploiement de lentilles cylindriques mobiles d'entrée et sortie (326, 328, 327) situés entre les premiers et les deuxièmes moyens de focalisation (325, 331) ; et
   des moyens de manoeuvre pour déplacer les moyens de déploiement de lentilles cylindriques (326, 328, 327) ;
   dans lequel les premier moyens de focalisation (325) sont positionnés de manière à recevoir la lumière séparée par couleurs (L1, L2, L3) venant du séparateur de faisceau (315) ; et
   la commande des moyens de manoeuvre produit des bandes de balayage distinctes, sensiblement monochromes, à partir de la lumière séparée par couleurs (L1, L2, L3) venant du séparateur de faisceau (315) ; **caractérisé en ce que** les moyens de déploiement de lentilles cylindriques comprennent :

   un premier disque de lentilles en spirale (326) qui comporte une pluralité de cellules de lentilles cylindriques (326a) disposées en spirale et qui est conçu de manière à pouvoir tourner ;
   un deuxième disque de lentilles en spirale (327) qui est installé à l'opposé du premier disque de lentilles en spirale (326) et qui est conçu de manière à tourner à la même vitesse que le premier disque de lentilles en spirale (326) ; et
   une tige de verre (328) installée entre les premier et deuxième disques de lentilles en spirale.

2. Projecteur vidéo en couleurs selon la revendication 1, dans lequel les premier, deuxième et troisième plans de miroir dichroïque (318a, 319a, 320a) sont respectivement intégrés dans des premier, deuxième et troisième prismes dichroïques (318, 319, 320).

3. Projecteur vidéo en couleurs selon la revendication 2, dans lequel les premier, deuxième et troisième prismes dichroïques sont intégrés de manière à former un seul élément (313).

4. Projecteur vidéo en couleurs selon l'une quelconque des revendications précédentes, comprenant en plus :

un premier séparateur de faisceau polarisé (316) qui est installé face au premier plan de miroir dichroïque (318a) et qui transmet la lumière dans une direction de polarisation vers le premier plan de miroir dichroïque (318a) et réfléchit la lumière dans l'autre direction de polarisation vers un deuxième séparateur de faisceau polarisé (317) ;

un deuxième séparateur de faisceau polarisé (317), qui est installé en dessous du premier séparateur de faisceau polarisé (316) et qui renvoie par réflexion la lumière venant du premier séparateur de faisceau polarisé (316) vers le premier plan de miroir dichroïque (318a) ; et

une plaque demi-onde (324) qui est installée entre l'un des premier et deuxième séparateurs de faisceau polarisés (316, 317) et le premier plan de miroir dichroïque (318a).

5.  Projecteur vidéo en couleurs selon l'une quelconque des revendications précédentes, comprenant en plus une lentille de collimation (314) qui est installée entre une source lumineuse (310) et le séparateur de faisceau (315) et qui concentre la lumière (1) de manière à former un faisceau parallèle.

6.  Projecteur vidéo en couleurs selon l'une quelconque des revendications précédentes, dans lequel les premiers moyens de focalisation sont une lentille cylindrique (325) qui réduit la section transversale du faisceau de lumière séparée par couleurs ($I_1$, $I_2$, $I_3$) focalisée sur le premier disque de lentilles en spirale (326) ; et les deuxièmes moyens de focalisation sont une lentille cylindrique (331) qui concentre la lumière incidente séparée par couleurs de manière à former un faisceau parallèle.

7.  Projecteur vidéo en couleurs selon l'une quelconque des revendications précédentes, comprenant en plus des premier et deuxième arrangements de lentilles en oeil de mouche (333, 335) qui font que la lumière transmise par les moyens de déploiement de lentilles cylindriques (326, 327, 328) parvient à un modulateur de lumière (340) de telle façon que les faisceaux de même couleur se chevauchent sur une zone de couleur correspondante du modulateur de lumière (340).

# FIG. 1 (PRIOR ART)

# FIG. 2 (PRIOR ART)

# FIG. 3

EP 1 793 621 B1

# FIG. 4

# FIG. 5

# FIG. 6

EP 1 793 621 B1

# FIG. 7

# FIG. 8

# FIG. 9

91(93)

91a(93a)

105

103

100(100')

92

S N

N S

101

# FIG. 10

EP 1 793 621 B1

# FIG. 11

85 90 91 93 87 110 111 113 120 130b

111a 113a

EP 1 793 621 B1

# FIG. 12

# FIG. 13

EP 1 793 621 B1

EP 1 793 621 B1

# FIG. 14

33

# FIG. 15

EP 1 793 621 B1

# FIG. 16

# FIG. 17

# FIG. 18

EP 1 793 621 B1

# FIG. 19

EP 1 793 621 B1

# FIG. 20

# FIG. 21A

326(327)

326a(327a)

L

# FIG. 21B

# FIG. 22

# FIG. 23

EP 1 793 621 B1

# FIG. 24

EP 1 793 621 B1

# FIG. 25A

# FIG. 25B

# FIG. 26A

426a  F2R1  F2R3  F1R1  F1R3

F2R2  F1R2

# FIG. 26B

426a  F2R1  F2R3  F1R1  F1R3  427a

F2R2  F1R2

# FIG. 27A

# FIG. 27B

# FIG. 27C

# FIG. 28

EP 1 793 621 B1

# FIG. 29

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0060397 A